# EUROPEAN PATENT APPLICATION

(11) **EP 2 654 012 A1**
(43) Date of publication of application: **23.10.2013**
(21) Application number: 12803768.6
(22) Date of filing: 24.02.2012
(51) Int. Cl.: G06Q 30/06, G06Q 10/02, G06Q 50/12

(54) **INFORMATION PROVISION DEVICE, INFORMATION PROVISION METHOD, INFORMATION PROVISION PROGRAM, AND RECORDING MEDIUM**

(30) Priority: 30.06.2011 JP 2011146825
(71) Applicant: Rakuten, Inc., Tokyo 140-0002 (JP)
(72) Inventor: UDAGAWA Atsushi, Tokyo 140-0002 (JP)
(74) Representative: HOFFMANN EITLE
(86) International application number: PCT/JP2012/054581
(87) International publication number: WO 2013/001850

(57) **Abstract**

Information related to services is provided in a mode which improves convenience of a user to consider a reservation. An information providing apparatus comprises: a remaining count acquiring means that acquires, from a remaining count memory means that stores remaining numbers of reservation targets per reservation target specified by a combination of a service and an offer period of the service, the remaining numbers of reservation targets matching a user's request; a history acquiring means that acquires, from a history memory means that stores a remaining count increase history of an increase in the remaining numbers stored in the remaining count memory means, the remaining count increase history of the service matching the user's request; an estimating means that estimates a probability that the remaining numbers of the reservation targets become a threshold or more by an offer period of reservation targets for which the remaining numbers acquired by the remaining number acquiring means are less than the threshold, among the reservation targets matching the user's request, based on the remaining count increase history acquired by the history acquiring means; and a providing means that provides information related to the reservation targets matching the user's request, in a display mode matching the probability estimated by the estimating means.

## Description

### Technical Field

The present invention relates to a technical field of an information providing apparatus and an information providing method which provide information related to services in a reservation system which accepts reservations of services.

### Background Art

Conventionally, a reservation system is known which accepts a reservation to use a service such as an accommodation reservation of an accommodation facility or a ticket reservation of transportation means. The service which requires a reservation usually has an upper limit number of services (for example, the number of guest rooms and the number of seats) which can be provided at a period. Hence, the reservation system manages the remaining number of reservations such that double booking does not take place.

For example, an information providing apparatus which provides information about services which can be reserved searches for services which satisfy conditions specified by a user and provides information related to the services which satisfy the conditions. In this case, there is an information providing apparatus which, when there is no rest of services which can be reserved or the remaining number is less than the number of use specified by the user, does not display information about a service which does not have remaining numbers which the user requires for a reservation. On the other hand, there is also an information providing apparatus which displays information related to services which satisfy conditions irrespectively of the remaining numbers.

Meanwhile, even when there is not the remaining number which the user requires at a point of time when the user browses information, the remaining number increases to a number which the user requires by an offer period of the service. This is because, for example, reservations are canceled or the number of services which can be simultaneously provided increases in some cases. For example, Patent Literature 1 discloses a technique of, when a client who made a reservation is not within a predetermined range of a place to offer a service, canceling this reservation on a reservation system side.

### Prior Art List

### Patent Literature

Patent Literature 1: Japanese Patent Application Laid-Open (JP-A) No. 2007-149120

### Summary of the Invention

### Problem to be solved by the Invention

When a conventional information providing apparatus does not uniformly display information related to services which do not have the remaining numbers which a user requires at a point of time when the user browses information, the user cannot recognize the existence of these services. By this means, the user cannot wait for cancelation of a reservation of this service, and therefore the user misses a chance to reserve this service in some cases. To prevent the user from missing a chance of a reservation, it is necessary to search for a service again later or search for a service which does not have the remaining number which the user requires according to another method. Thus, labor which is bothersome for users is required.

By contrast with this, information related to a service which does not have the remaining number which the user requires is simply displayed. In this case, the user can wait for cancelation of this service. However, when a likelihood that the remaining number of this service becomes the number which the user requires or more is low, a likelihood that the user cannot reserve this service by an offer period and waiting for cancelation is not beneficial for the user. Further, in some cases, the user waits for cancelation, and therefore misses a chance to reserve another service which has the remaining number which the user requires. Thus, every case is inconvenient for users.

The present invention is made in light of the above problem, and an object of the present invention is to provide an information providing apparatus, an information providing method, an information providing program, and a recording medium which can provide information related to a service in a mode which improves convenience of a user to consider a reservation.

### Means for solving the Problem

In order to solve the problem the invention according to claim 1 is an information providing apparatus comprising:
a remaining count acquiring means that acquires, from a remaining count memory means that stores remaining numbers of reservation targets per reservation target specified by a combination of a service and an offer period of the service, the remaining numbers of reservation targets matching a user's request;
a history acquiring means that acquires, from a history memory means that stores a remaining count increase history of an increase in the remaining numbers stored in the remaining count memory means, the remaining count increase history of the service matching the user's request;
an estimating means that estimates a probability that the remaining numbers of the reservation targets become a threshold or more by the offer period of the reservation targets for which the remaining numbers acquired by the remaining count acquiring means are less than the threshold, among the reservation targets matching the user's request, based on the remaining count increase history acquired by the history acquiring means; and
a providing means that provides information related to the reservation targets matching the user's request, in a display mode matching the probability estimated by the estimating means.

The present invention provides information related to the reservation targets in the display mode matching the probability that the remaining numbers of reservation targets become a threshold or more by the offer period of the reservation targets the remaining numbers of which are less than the threshold, so that it is possible to improve convenience of the user to consider a reservation.

The invention according to claim 2 is the information providing apparatus according to claim 1,
wherein the user's request includes a use date and a number of use of a reservation target;
the estimating means estimates a probability that the remaining number of the reservation targets which is acquired by the remaining count acquiring means and which is less than the number of use becomes the number of use or more by the use date; and
the providing means provides information related to reservation targets for which the probability estimated by the estimating means is a value set in advance or more among the reservation targets matching the user's request.

The present invention displays information of reservation targets in which a probability that the remaining numbers become the threshold or more is a value set in advance or more by the offer period among the reservation targets the remaining numbers of which are less than the threshold, so that the user does not have to consider a reservation of reservation targets in which the probability that the remaining numbers become the threshold or more is low among the reservation targets the remaining numbers of which are less than the threshold.

The invention according to claim 3 is the information providing apparatus according to claim 1,
wherein the user's request includes identification information which identifies a service;
the estimating means estimates a probability that the remaining number of the reservation target becomes 1 or more by the use date of reservation targets for which the remaining number acquired by the remaining number acquiring means is less than 1; and
the providing means provides information which indicates the probability estimated by the estimating means, in association with information related to the reservation targets matching the user's request.

The present invention displays information which indicates the probability that the remaining numbers of the reservation targets become the threshold or more by the offer period of the reservation targets the remaining numbers of which are less than the threshold, so that the user can consider whether or not to wait until the remaining numbers become the threshold or more, based on the information which indicates the probability.

The invention according to claim 4 is the information providing apparatus according to claim 3, further comprising
an acquiring means that acquires the remaining number associated with a service provided by a provider of the reservation targets whose remaining numbers are less than the threshold from the remaining count memory means, and that acquires a number of reservation targets associated with the service provided by the provider, from a reservation target count memory means that stores the number of the reservation targets per reservation target,
the providing means provides information which indicates the probability estimated by the estimating means, for a reservation target for which a reservation rate of the service provided by the provider is less than a value set in advance, among the reservation targets matching the user's request, based on the remaining number and the number of reservation targets acquired by the acquiring means.

The present invention can prevent information which is related to reservation targets provided by a provider which has an overall reservation rate of services to be provided to such a degree that the reservation rate does not need to increase, and which indicates the probability that the remaining numbers become the threshold or more from being displayed.

The invention according to claim 5 is the information providing apparatus according to any one of claims 1 to 4,
wherein the remaining count increase history stores a history that a reservation holder cancels a reservation of the service, as the remaining count increase history; and
the estimating means estimates a probability that the remaining numbers become the threshold or more based on the cancellation of the reservation of the reservation targets by the offer period of the reservation targets whose remaining numbers are less than the threshold.

The present invention can estimate the probability that the remaining numbers become the threshold or more, based on the history of cancelation of reservations of services associated with the reservation targets the remaining numbers of which are less than the threshold.

The invention according to claim 6 is the information providing apparatus according to any one of claims 1 to 5,
wherein the remaining count increase history stores a history of an increase in a number of reservation targets of services, as the remaining count increase history; and
the estimating means estimates a probability that the remaining number becomes the threshold or more based on the increase in the number of reservation targets of the reservation targets by the offer period of the reservation targets whose remaining numbers are less than the threshold.

The present invention can estimate the probability that the remaining numbers become the threshold or more, based on the history of an increase in the number of the reservation targets of services associated with the reservation targets the remaining numbers of which are less than the threshold.

The invention according to claim 7 is the information providing apparatus according to any one of claims 1 to 6, further comprising
a day count acquiring means acquires a number of days associated with the reservation targets whose remaining numbers are less than the threshold, from a day count memory means which stores the number of days from a cancelation day of a service whose reservation is canceled when a reservation holder does not satisfy a condition set in advance on the cancelation day, to an offer day of the service,
wherein, when a number of remaining days by the offer period of the reservation targets whose remaining numbers are less than the threshold is greater than the number of days acquired by the acquiring means, the estimating means estimates a high probability as compared to the case where the number of remaining days is the number of days or less.

The present invention estimates a higher probability that the remaining numbers of reservation targets in which a cancelation date on which a reservation is canceled automatically if a reservation holder does not satisfy the conditions exists by the offer period of the reservation target become the threshold or more, so that it is possible to increase precision to estimate the probability that the remaining numbers become the threshold or more.

The invention according to claim 8 is the information providing apparatus according to any one of claims 1 to 7, further comprising
a reservation information acquiring means that acquires the reservation information of the reservation targets whose remaining numbers are less than the threshold, from reservation information which stores reservation information which includes a number of users of a reserved reservation target,
when the number of users included in the reservation information acquired by the reservation information acquiring means is a number of people set in advance, the estimating means estimates a high probability as compared to the case where the number of users is not the number of people set in advance.

When a probability that a reservation holder who currently reserves the reservation target the remaining number of which is less than the threshold cancels the reservation changes depending on the number of people who use the reservation target, the present invention can increase precision to estimate the probability that the remaining number becomes the threshold or more.

The invention according to claim 9 is the information providing apparatus according to any one of claims 1 to 8, further comprising:
a user identification information acquiring means that acquires, from a reservation information memory means that stores reservation information which includes user identification information which is used to identify a user who reserves a reservation target, the user identification information included in the reservation information of the reservation targets whose remaining numbers are less than the threshold; and
a reservation history acquiring means that acquires, from a reservation history memory means that stores a reservation history that a user makes a reservation and cancels the reservation, the reservation history of the user identified based on the user identification information acquired by the user identification information acquiring means,
wherein the estimating means estimates a high probability, based on the reservation history acquired by the reservation history acquiring means, when a reservation cancelation rate of the user who reserves the reservation target whose remaining number is less than the threshold is high.

The present invention estimates the probability that the remaining number of the reservation targets becomes the threshold or more, according to the cancelation rate of a past reservation of a reservation holder who currently reserves the reservation target the remaining number of which is less than the threshold, so that it is possible to increase precision to estimate the probability that the remaining number becomes the threshold or more.

The invention according to claim 10 is the information providing apparatus according to any one of claims 1 to 8, further comprising
a user identification information acquiring means that acquires, from a reservation information memory means that stores reservation information which includes user identification information which is used to identify a user who reserves a reservation target, the user identification information included in the reservation information of the reservation targets whose remaining numbers are less than the threshold,
when the reservation information of other reservation targets provided at the same period as the reservation targets whose remaining numbers are less than the threshold among the reservation information including the user identification information acquired by the user identification information acquiring means is stored in the reservation information memory means, the estimating means estimates a high probability as compared to the case where the reservation information is not stored.

When a reservation holder reserves a plurality of reservation targets which are provided at the same period, the reservation holder is likely to cancel a reservation of one of reservation targets by the offer period. When the reservation holder who currently reserves the reservation target the remaining number of which is less than the threshold reserves a reservation target which is provided at the same period as this reservation target, the present invention estimates a higher probability that the remaining number of the reservation target becomes the threshold or more, so that it is possible to increase precision to estimate the probability that the remaining number becomes the threshold or more.

The invention according to claim 11 is an information providing method executed by an information providing apparatus comprising:
a remaining number acquiring step of acquiring, from a remaining count memory means that stores remaining numbers of reservation targets per reservation target specified by a combination of a service and an offer period of the service, the remaining numbers of reservation targets matching a user's request;
a history acquiring step of acquiring, from a history memory means that stores a remaining count increase history of an increase in the remaining numbers stored in the remaining count memory means, the remaining count increase history of the service matching the user's request;
an estimating step of estimating a probability that the remaining number of the reservation targets becomes a threshold or more by the offer period of reservation targets for which the remaining numbers acquired in the remaining number acquiring step are less than the threshold, among the reservation targets matching the user's request, based on the remaining count increase history acquired in the history acquiring step; and
a providing step of providing information related to the reservation targets matching the user's request in a display mode matching the probability estimated in the estimating step.

The invention according to claim 12 is an information providing program causing a computer included in an information providing apparatus to function as:
a remaining count acquiring means that acquires, from a remaining count memory means that stores remaining numbers of reservation targets per reservation target specified by a combination of a service and an offer period of the service, the remaining numbers of reservation targets matching a user's request;
a history acquiring means that acquires, from a history memory means that stores a remaining count increase history of an increase in the remaining numbers stored in the remaining count memory means, the remaining count increase history of the service matching the user's request;
an estimating means that estimates a probability that the remaining numbers of the reservation targets become a threshold or more by the offer period of the reservation targets for which the remaining numbers acquired by the remaining count acquiring means are less than the threshold, among the reservation targets matching the user's request, based on the remaining count increase history acquired by the history acquiring means; and
a providing means that provides information related to the reservation targets matching the user's request, in a display mode matching the probability estimated by the estimating means.

The invention according to claim 13 is a recording medium having a computer-readable information providing program recorded thereon which causes a computer included in an information providing apparatus to function as:
a remaining count acquiring means that acquires, from a remaining count memory means that stores remaining numbers of reservation targets per reservation target specified by a combination of a service and an offer period of the service, the remaining numbers of reservation targets matching a user's request;
a history acquiring means that acquires, from a history memory means that stores a remaining count increase history of an increase in the remaining numbers stored in the remaining count memory means, the remaining count increase history of the service matching the user's request;
an estimating means that estimates a probability that the remaining numbers of the reservation targets become a threshold or more by the offer period of the reservation targets for which the remaining numbers acquired by the remaining count acquiring means are less than the threshold, among the reservation targets matching the user's request, based on the remaining count increase history acquired by the history acquiring means; and
a providing means that provides information related to the reservation targets matching the user's request, in a display mode matching the probability estimated by the estimating means.

### Advantageous Effects of Invention

The present invention provides information related to reservation targets in a display mode matching a probability that the remaining numbers of reservation targets become a threshold or more by an offer period of the reservation targets the remaining numbers of which are less than the threshold and, consequently, improve convenience of a user to consider a reservation.

### Brief Description of the Drawings

Fig. 1 is a view illustrating an example of a schematic configuration of an accommodation facility reservation system S according to an embodiment.
Figs. 2A and 2B are display examples of search result pages.
Fig. 3 is a view illustrating a display example of a vacancy calendar page.
Fig. 4 is a block diagram illustrating an example of a schematic configuration of an accommodation facility reservation server 1 according to an embodiment.

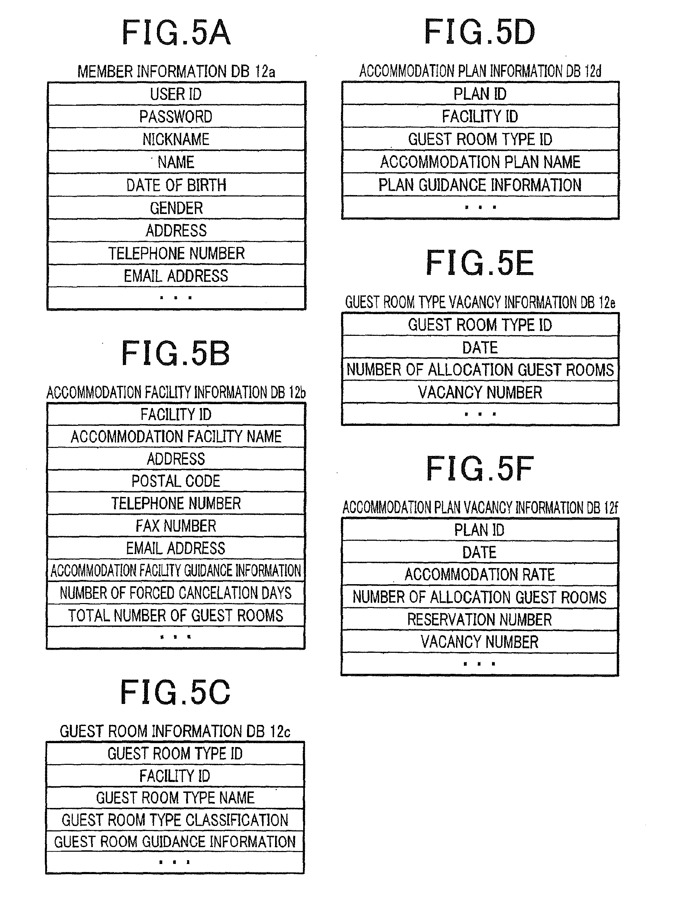

Fig. 5A is a view illustrating an example of content registered in a member information DB 12a according to an embodiment. Fig. 5B is a view illustrating an example of content registered in an accommodation facility information DB 12b. Fig. 5C is a view illustrating an example of content registered in a guest room information DB 12c. Fig. 5D is a view illustrating an example of content registered in an accommodation plan information DB 12d. Fig. 5E is a view illustrating an example of content registered in a guest room type vacancy information DB 12e. Fig. 5F is a view illustrating an example of content registered in an accommodation plan vacancy information DB 12f.
Fig. 6A is a view illustrating an example of content registered in a reservation information DB 12g according to an embodiment. Fig. 6B is a view illustrating an example of content registered in a vacancy waiting reservation information DB 12h. Fig. 6C is a view illustrating an example of content registered in a reservation history information DB 12i. Fig. 6D is a view illustrating an example of content registered in an allocation count increase history DB 12j.
Fig. 7 is a flowchart illustrating a processing example of processing at the time of reception of a search request in a system control unit 14 of the accommodation facility reservation server 1 according to an embodiment.
Fig. 8 is a flowchart illustrating a processing example of processing at the time of reception of a vacancy calendar request in the system control unit 14 of the accommodation facility reservation server 1 according to an embodiment.
Fig. 9 is a flowchart illustrating a processing example of vacancy occurrence score estimation processing of the system control unit 14 of the accommodation facility reservation server 1 according to an embodiment.
Fig. 10 is a flowchart illustrating a processing example of cancelation occurrence score estimation processing of the system control unit 14 of the accommodation facility reservation server 1 according to an embodiment.

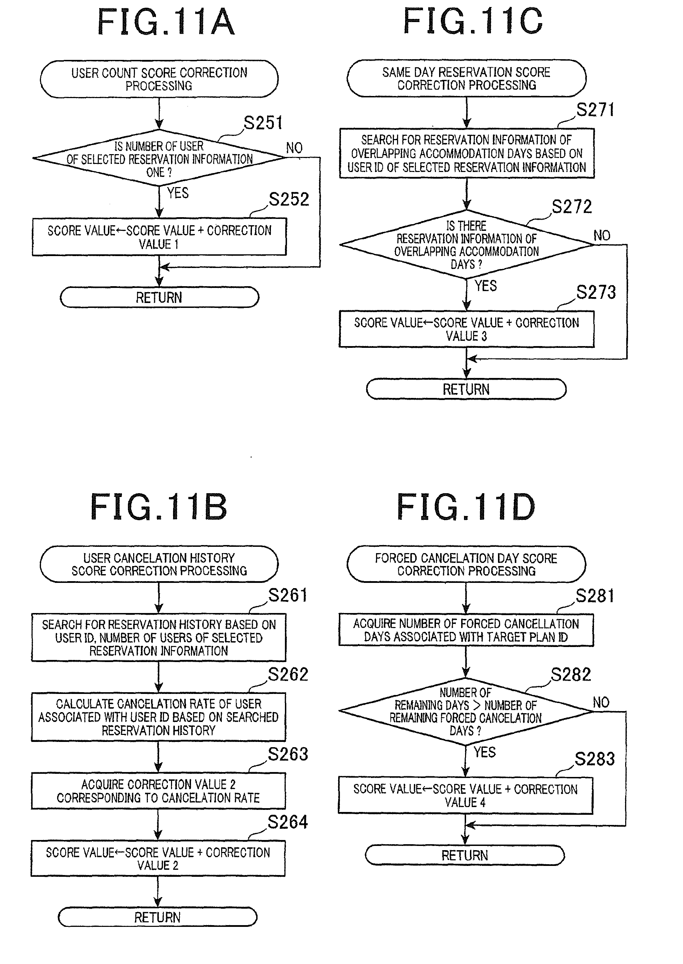

Fig. 11A is a flowchart illustrating a processing example of user count score correction processing of the system control unit 14 of the accommodation facility reservation server 1 according to an embodiment. Fig. 11B is a flowchart illustrating a processing example of user cancelation history score correction processing of the system control unit 14 of the accommodation facility reservation server 1 according to an embodiment. Fig. 11C is a flowchart illustrating a processing example of same-day reservation score correction processing of the system control unit 14 of the accommodation facility reservation server 1 according to an embodiment. Fig. 11D is a flowchart illustrating a processing example of forced cancelation day score correction processing of the system control unit 14 of the accommodation facility reservation server 1 according to an embodiment.
Fig. 12 is a flowchart illustrating a processing example of allocation increase occurrence score estimation processing of the system control unit 14 of the accommodation facility reservation server 1 according to an embodiment.
Fig. 13A is a flowchart illustrating a processing example of processing at the time of reception of a vacancy waiting reservation request in the system control unit 14 of the accommodation facility reservation server 1 according to an embodiment. Fig. 13B is a flowchart illustrating a processing example of processing at the time of an increase in a vacancy number in the system control unit 14 of the accommodation facility reservation server 1 according to an embodiment.

### Mode for carrying out the Invention

An embodiment of the present invention will be described below in detail with reference to the drawings. The embodiment will be described below where the present invention is applied to an accommodation facility reservation system.

### [1. Outlines of configuration and functions of accommodation facility reservation system]

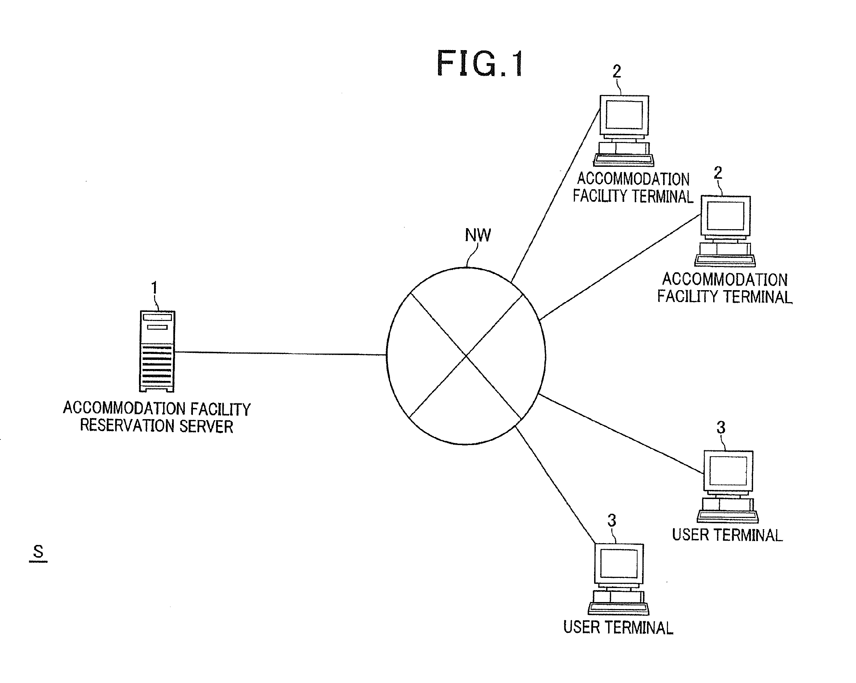

First, outlines of a configuration and a function of an accommodation facility reservation system S according to the present embodiment will be described using Figs. 1 to 3. Fig. 1 is a view illustrating an example of a schematic configuration of the accommodation facility reservation system S according to the present embodiment.

As illustrated in Fig. 1, the accommodation facility reservation system S employs a configuration including an accommodation facility reservation server 1, a plurality of user terminals 3 and a plurality of accommodation facility terminals 2. Further, the accommodation facility reservation server 1, and each user terminal 3 and accommodation facility terminal 2 can transmit and receive data to and from each other using, for example, TCP/IP for a communication protocol through a network NW. In addition, the network NW is constructed with, for example, the Internet, dedicated communication lines (for example, CATV (Community Antenna Television) lines), a mobile communication network (including, for example, base stations) and a gate way.

The accommodation facility reservation server 1 (an example of an information providing apparatus according to the present invention) is a server apparatus which executes various types of processing related to a website (referred to as an "accommodation facility reservation site" below) which accepts a reservation of an accommodation of an accommodation facility. The accommodation facility reservation site is entrusted to accept reservations from a plurality of accommodation facilities. The accommodation facility reservation server 1 performs processing of, for example, providing information related to accommodation facilities or accommodation plans to the user terminal 3 and reserving accommodation facilities according to a request from the user terminal 3. The accommodation plan is, for example, an accommodation service which is planned by an accommodation facility side, and a guest room type and service content are defined per accommodation plan.

The accommodation facility terminal 2 is a terminal apparatus which is utilized by, for example, an employee of an accommodation facility which entrusts a reservation to the accommodation facility reservation site. For example, an employee allocates guest rooms reservations of which are entrusted, or browses a vacancy status by operating the accommodation facility terminal 2. The accommodation facility terminal 2 is, for example, a personal computer.

The user terminal 3 (an example of the terminal apparatus according to the present invention) is a terminal apparatus of a user who utilizes the accommodation facility reservation site. By accessing the accommodation facility reservation server 1 based on a user's operation, the user terminal 3 receives webpages from the accommodation facility reservation server 1 to display. In the user terminal 3, software such as a browser or an email client is implemented. For the user terminal 3, a mobile information terminal such as a personal computer, a PDA (Personal Digital Assistant) or a smartphone, or a mobile telephone is used.

In the accommodation facility reservation system S employing this configuration, when providing information related to accommodation plans matching a user's request to the user terminal 3, if the vacancy number (an example of the remaining number according to the present invention) in the accommodation plan goes below a necessary number, the accommodation facility reservation server 1 estimates a probability that the vacancy number (the number of remaining rooms) becomes a necessary number or more by a check-in day. Further, the accommodation facility reservation server 1 provides information related to the accommodation plan in a mode matching the estimated probability. Meanwhile, the vacancy number is the number of guest rooms which is not currently reserved and is left among the number of guest rooms which can provide a specific accommodation plan on a specific day. The required number is a vacancy number which is required to display information related to an accommodation plan having vacancy. The probability that the vacancy number becomes the required number or more is estimated based on a history of an increase in the vacancy number at the accommodation facility which provides the accommodation plan. The history of the increase in the vacancy number is a history of user's cancellation of a reservation. For example, when the rate of cancelation of a reservation is greater, the vacancy number is likely to increase, and therefore the probability that the vacancy number increases to the required number or more becomes higher. Further, the history of the increase in the vacancy number is a history of an increase in an allocation number of entrusting of acceptance of reservations from the accommodation facility. When, for example, the frequency of an increase in the allocation number is higher or the quantity is greater, the probability that the vacancy number increases to the required number or more becomes higher. In reality, instead of calculating the probability that the vacancy room increases to the required number or more, the accommodation facility reservation server 1 determines a vacancy occurrence score as information corresponding to this probability. When the vacancy occurrence score is higher, a likelihood that the vacancy number becomes the required number or more is higher. By, for example, using such information which changes for the probability, processing of estimating the probability is simplified. In addition, the accommodation facility reservation server 1 may actually calculate the probability.

Next, a display mode matching an estimated probability will be described. When searching for an accommodation plan, the user can specify search conditions. The search conditions which can be specified include, for example, a check-in day, a check-out day, the number of use guest rooms (an example of the number of use according to the present invention), an area, a guest room type, the number of users and a rate. The accommodation facility reservation server 1 searches for accommodation plans which satisfy the specified search conditions and sends a webpage (referred to as a "search result page" below) which shows a list of searched accommodation plans, to the user terminal 3. In this case, the accommodation facility reservation server 1 estimates the probability that the vacancy number becomes the required number or more by the check-in day, for an accommodation plan the vacancy number of which is less than the number of use guest rooms specified by the user. Further, the accommodation facility reservation server 1 sends a search result page which does not include information of accommodation plans the estimated probabilities of which are less than the probability set in advance.

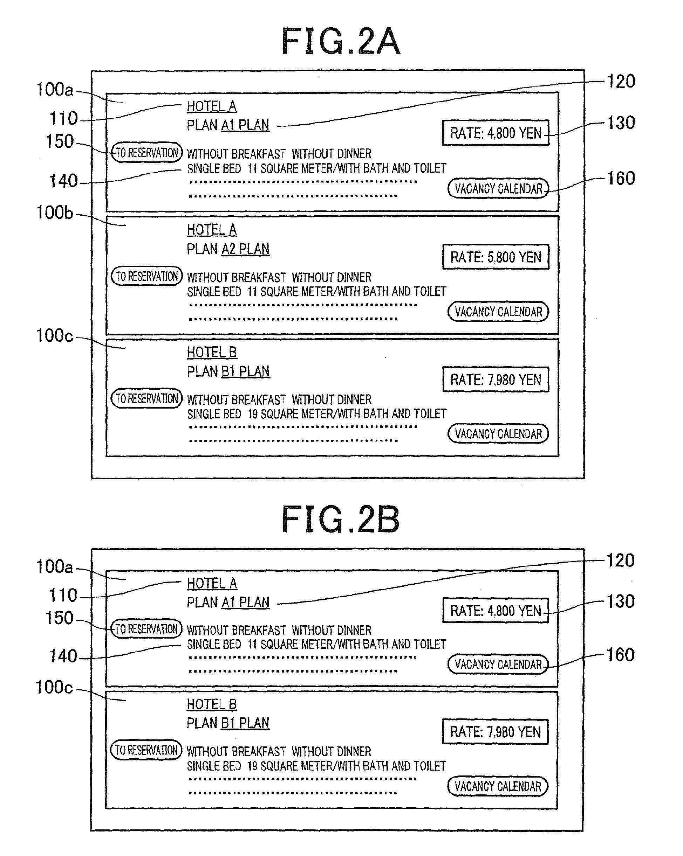

Figs. 2A and 2B are display examples of search result pages. Fig. 2A illustrates a display example where the vacancy number of each searched accommodation plan is the number of use guest rooms or more. As illustrated in Fig. 2A, a search result page displays an accommodation plan display area 100 (100a to 100c) per searched accommodation plan. The accommodation plan display area 100 displays, for example, a hotel page link 110, a product plan link 120, a rate display area 130, an accommodation plan description 140, a reservation button 150 and a vacancy calendar button 160. The hotel page link 110 indicates a hotel name which provides an accommodation plan. Further, the hotel page link 110 is a hyperlink to a webpage (referred to as a "hotel page" below) which displays information of a hotel indicated by the hotel name. The accommodation plan link 120 indicates an accommodation plan name. Further, the accommodation plan link 120 is a hyperlink to a webpage (referred to as an "accommodation plan page" below) which displays information of an accommodation plan indicated by the accommodation plan name. The rate display area 130 displays a rate of the accommodation plan. The accommodation plan description 140 displays, for example, description of the accommodation plan and description of a guest room provided by the accommodation plan. The reservation button 150 is a button for performing reservation procedure. The vacancy calendar 160 is a button for displaying a webpage (referred to as a "vacancy calendar page" below) which displays a vacancy status of one month of an accommodation plan.

In an example in Fig. 2A, the accommodation plan display area 100a which displays information of an A1 plan of a hotel A, the accommodation plan display area 100b which displays information of an A2 plan of the hotel A and the accommodation plan display area 100c which displays information of a B1 plan of a hotel B are displayed. That is, the A1 plan, the A2 plan and the B1 plan are searched. When, for example, the user specifies 1 as the number of use guest rooms of the search conditions, each of the A1 plan, the A2 plan and the B1 plan has vacancy of one or more rooms.

Fig. 2B illustrates a display example when the vacancy numbers of part of accommodation plans of the searched accommodation plans are less than the number of use guest rooms. For example, the user specifies 2 as the number of use guest rooms of the search conditions. By contrast with this, although the vacancy number of the A1 plan is 2 or more, the vacancy numbers of the A2 plan and the B1 plan are 1. Further, the probability that the vacancy number of the A2 plan becomes 2 or more is less than the threshold, and the probability that the vacancy number of the B1 plan becomes 2 or more is the threshold or more. In this case, as illustrated in Fig. 2B, the accommodation plan display area 100a which displays the information of the A1 plan and the accommodation plan display area 100c which displays the information of the B1 plan are displayed, and the accommodation plan display area 100b which displays the information of the A2 plan is not displayed. The reservation button 150 which is displayed in the accommodation plan display area 100c is not a button for performing normal reservation procedure. When the user selects the reservation button 150 displayed in the accommodation plan display area 100c, a message indicating no vacancy is displayed on the screen, and a message indicating whether or not to wait for cancelation is displayed. Further, when the user performs an operation of selecting to wait for cancelation, if the vacancy number becomes the number of use guest rooms or more by the check-in day, a reservation is automatically made. This reservation is referred to as a "vacancy waiting reservation". In addition, a message indicating no vacancy may be displayed in the accommodation plan display area 100b. Further, instead of the reservation button 150, a vacancy waiting reservation button which is a dedicated button for performing procedure of a vacancy waiting reservation may be displayed or a favorite registration button for registering as a favorite an accommodation plan with information displayed in the display area 100 may be displayed. For example, a list of accommodation plans registered as the favorite by the user can be displayed in a user dedicated webpage in the accommodation facility reservation site. The user performs a predetermined operation from this webpage to, for example, display an accommodation plan page of an accommodation plan registered as the favorite or confirm the vacancy status.

When the information of the A2 plan is displayed in the search result even when the probability that the vacancy number of the A2 plan becomes 2 or more is less than the threshold, the user who sees the displayed information or the accommodation plan page of the A2 plan likes the A2 plan. Then, the user is likely to consider whether or not to make a reservation by waiting for vacancy of two or more rooms of the A2 plan to be available. However, the A2 plan has a lower likelihood that the vacancy number becomes the number of use guest rooms or more by the check-in day than a certain level, and therefore it is more likely to be wasteful for the user to browse the information of the A2 plan, and consider whether or not to make a reservation or wait for vacancy. Further, the number of accommodation plans which are reservation consideration targets increases, and therefore it is bothersome for the user to check each accommodation plan. By contrast with this, according to the configuration illustrated in Fig. 2B, the search result page does not display information of accommodation plans the vacancy numbers of which are less likely to be the numbers of use guest rooms or more, so that it is possible to improve convenience of the user.

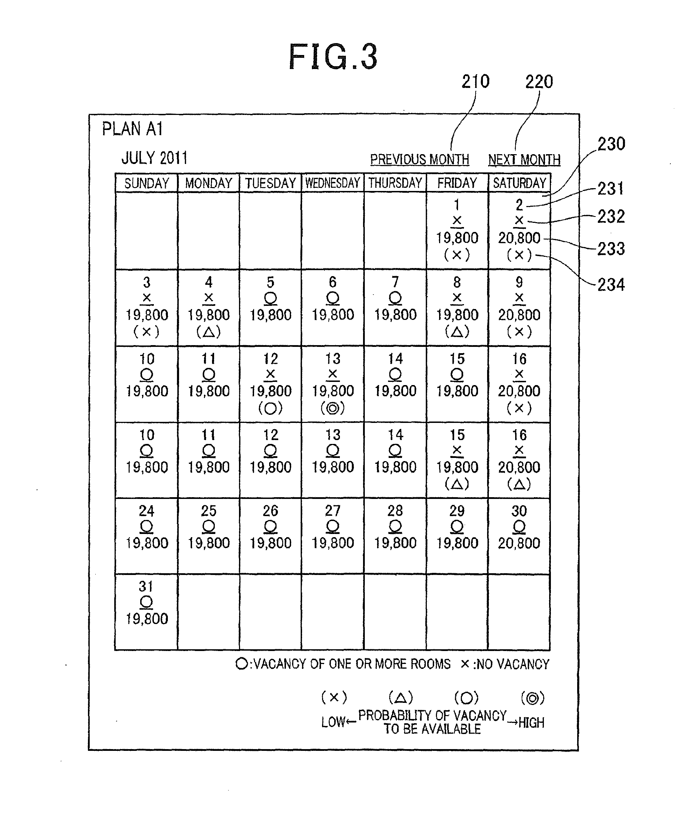

Fig. 3 is a view illustrating a display example of a vacancy calendar page. The vacancy calendar page is displayed when, for example, the vacancy calendar button 160 is selected by the user. Further, the vacancy calendar page displays a previous month link 210 and a next month link 220. The previous month link 210 is a hyperlink to a vacancy calendar page corresponding to a previous month of the month the vacancy status of which is displayed in a current vacancy calendar page. The next month link 220 is a hyperlink to a vacancy calendar page corresponding to a next month of the month the vacancy status of which is displayed in the current vacancy calendar page. Further, the vacancy calendar page displays a day information display area 230 per day. The day information display area 230 displays, for example, dates 231, pieces of vacancy status information 232, rates 233 and pieces of vacancy occurrence probability information 234. The vacancy status information 232 is information which indicates a vacancy status on a day indicated by the date 231. When, for example, the vacancy number is 1 or more, "O" is displayed as the vacancy status information 232. Further, when the vacancy number is 0, "×" is displayed as the vacancy status information 232. The vacancy status information 232 is also a hyperlink for making a reservation. "O" of the vacancy status information 232 is a hyperlink for making a normal reservation. Further, "×" of the vacancy status information 232 is a hyperlink for making a vacancy waiting reservation. The vacancy occurrence probability information 234 is information which indicates the probability that the vacancy number becomes 1 or more by a check-in day indicated by the date 231 in the day information display area 230 "×" of which is displayed as the vacancy status information 232. For example, one of "(⊙)", "(O)", "(Δ)" and "(×)" is displayed as the vacancy occurrence probability information 234. In order of "(⊙)", "(O)", "(Δ)" and "(×)", the vacancy number is highly likely to be 1 or more. In addition, although Fig. 3 illustrates a case as an example where the required number is 1, the required number may be 2 or more.

Thus, not only information which indicates no vacancy is displayed but also the vacancy occurrence probability information 234 which indicates the degree of a likelihood that the vacancy number becomes the required number or more is displayed for days of no vacancy, so that the user can use the vacancy occurrence probability information 234 as a material to consider whether or not to wait for vacancy and make a reservation. By this means, it is possible to improve convenience of the user.

In addition, when a reservation rate (operating rate) in a period set in advance with respect to the total number of guest rooms entrusted to the accommodation facility reservation site is a value set in advance or more at an accommodation facility which provides accommodation plans vacancy statuses of which are displayed in the vacancy calendar page, the vacancy status information 232 is not displayed. When the vacancy status information 232 is displayed, the user is highly likely to wait for vacancy and make a reservation. However, when the reservation rate is a certain degree or more on the accommodation facility side, a certain amount of profit can be expected, so that it is not necessary to increase the reservation number by daring to display the vacancy status information 232. Instead, not displaying the vacancy status information 232 is advantageous for the accommodation facility side. A period the reservation rate of which is calculated is, for example, a month or a day the vacancy status of which is displayed in the vacancy calendar page, or a period from today to a day which is a predetermined number of days before or after today. A target the reservation rate of which is calculated is, for example, all plans associated with a facility or a plan associated with various attributes such a price range or a room type.

### [2. Configuration of accommodation facility reservation server]

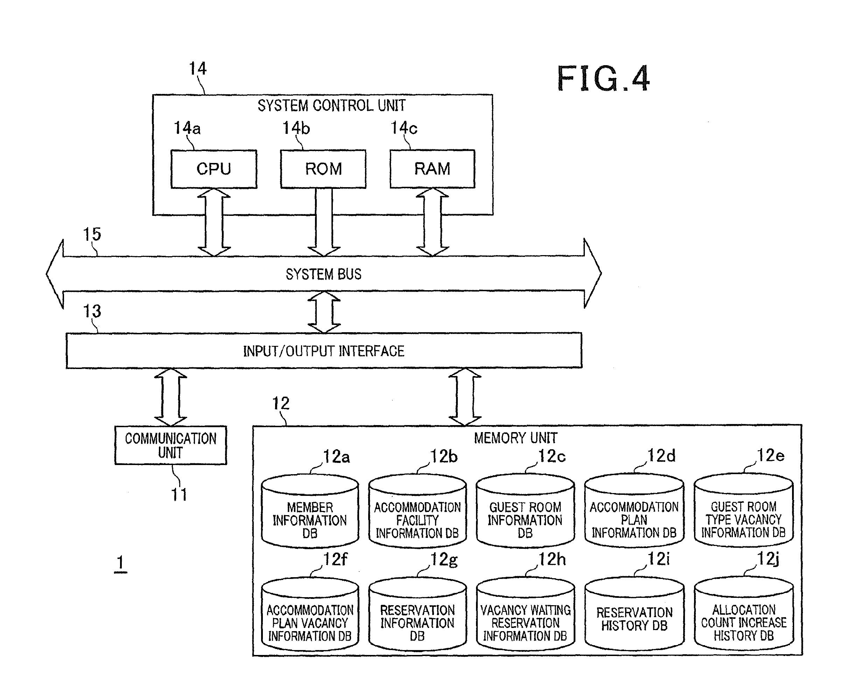

Next, a configuration of the accommodation facility reservation server 1 will be described using Figs. 4 to 6.

Fig. 4 is a block diagram illustrating an example of a schematic configuration of the accommodation facility reservation server 1 according to the present embodiment. As illustrated in Fig. 4, the accommodation facility reservation server 1 has a communication unit 11, a memory unit 12, an input/output interface 13 and a system control unit 14. Further, the system control unit 14 and the input/output interface 13 are connected through a system bus 15.

The communication unit 11 connects to the network NW, and controls a communication state with, for example, the user terminals 3.

The memory unit 12 (an example of a remaining count memory means, a history memory means, a reservation target count memory means, a day count memory means, a reservation information memory means and a reservation history memory means according to the present invention) is configured by, for example, a hard disk drive. In this memory unit 12, databases such as a member information DB (database) 12a, an accommodation facility information DB 12b, a guest room information DB 12c, an accommodation plan information DB 12d, a guest room type vacancy information DB 12e, an accommodation plan vacancy information DB 12f, a reservation information DB 12g, a vacancy waiting reservation information DB 12h, a reservation history DB 12i and an allocation count increase history DB 12j are constructed.

Fig. 5A is a view illustrating an example of content registered in the member information DB 12a according to the present embodiment. In the member information DB 12a, member information related to users registered as members in the accommodation facility reservation system S is registered. More specifically, in the member information DB 12a, a user ID, a password, a nickname, a name, a date of birth, the gender, an address, a telephone number and an email address are associated and registered per user. The user ID is user identification information.

Fig. 5B is a view illustrating an example of content registered in the accommodation facility information DB 12b according to the present embodiment. In the accommodation facility information DB 12b, accommodation facility information related to accommodation facilities is registered. More specifically, in the accommodation facility information DB 12b, for example, a facility ID which is identification information of an accommodation facility, an accommodation facility name, an address, a postal code, a telephone number, a FAX number, an email address, accommodation facility guidance information, the number of forced cancelation days and the total number of guest rooms are associated and registered per accommodation facility. The facility ID is accommodation facility identification information. The number of forced cancelation days is the number of days from a day (referred to as a "forced cancelation day" below) on which the accommodation facility reservation server 1 forcibly cancels a reservation to a check-in day. When the user does not satisfy conditions set by an accommodation facility by a previous day of the forced cancelation day after making a reservation, the reservation is canceled on the forced cancelation day. The conditions set by the accommodation facility are, for example, whether or not payment of an accommodation rate is done. In addition, the number of the forced cancelation days is set only when the accommodation facility side sets the forced cancelation day.

Fig. 5C is a view illustrating an example of content registered in the guest room information DB 12c according to the present embodiment. In the guest room information DB 12c, information related to guest room types entrusted to the accommodation facility reservation site by accommodation facilities is registered. More specifically, in the guest room information DB 12c, for example, a guest room type ID, a facility ID, a guest room type name, a guest room type classification and guest room guidance information are displayed. The guest room type ID is guest room type identification information when guest room types are classified according to a criterion of the accommodation facility side. For example, in some cases, the accommodation facility side classifies even a guest room type of identical twin guest rooms according to room sizes and views from the rooms. The facility ID is a facility ID of an accommodation facility which has guest rooms of accommodation types associated with guest room type IDs. The guest room type classification is information which indicates a type of a common guest room. The type of a common guest room includes, for example, a single bed, a semi-double bed, a double bed, twin beds and a Japanese room.

Fig. 5D is a view illustrating an example of content registered in the accommodation plan information DB 12d according to the present embodiment. In the guest room information DB 12c, accommodation plan information related to an accommodation plan is registered. More specifically, in the accommodation plan information DB 12d, for example, a plan ID, a facility ID, a guest room type ID, an accommodation plan name and accommodation plan guidance information are registered. The plan ID is accommodation plan identification information. The facility ID is a facility ID of an accommodation facility which provides accommodation plans associated with plan IDs. The guest room type ID is a guest room type ID of a guest room of an accommodation plan associated with a plan ID.

Fig. 5E is a view illustrating an example of content registered in the guest room type vacancy information DB 12e according to the present embodiment. In the guest room type vacancy information DB 12e, guest room type vacancy information which indicates, for example, the vacancy number per guest room type is registered. More specifically, in the guest room type vacancy information DB 12e, for example, a guest room type ID, a date, the number of allocation guest rooms and the vacancy number are associated and registered per guest room type and date. The number of allocation guest rooms is the total number of guest rooms allocated to the accommodation facility reservation site on a day indicated by a date among guest rooms of a guest room type associated with a guest room type ID. The number of guest rooms of the same guest room type differs depending on a day. The vacancy number is the number of guest rooms accommodations of which are not reserved on a day indicated by the date among guest rooms of a guest room type associated with guest room type ID.

Fig. 5F is a view illustrating an example of content registered in the accommodation plan vacancy information DB 12f according to the present embodiment. In the accommodation plan vacancy information DB 12f, the accommodation plan vacancy information which indicates, for example, the vacancy number per accommodation plan is registered. More specifically, in the accommodation plan vacancy information DB 12f, for example, a plan ID, a date, an accommodation rate, the number of allocation guest rooms (an example of the number of reservation targets according to the present invention), the reservation number and the vacancy number are associated and registered per accommodation plan and date. The number of allocation guest rooms is the total number of guest rooms which can be allocated to the accommodation facility reservation site on a day indicated by a date among guest rooms of an accommodation plan associated with a plan ID. The numbers of guest rooms of the same accommodation plan differ depending on a day. The reservation number is the number of guest rooms accommodations of which are reserved on a day indicated by the date in an accommodation plan associated with a plan ID. The vacancy number is the number of guest rooms accommodations of which can be reserved on a day indicated by a date among guest rooms of an accommodation plan associated with a plan ID.

In some cases, the sum of the reservation number and the vacancy number does not match with the number of allocation guest rooms. This occurs when guest rooms of the identical guest room type are allocated to a plurality of accommodation plans. For example, guest rooms of a guest room type T1 are allocated to the A1 plan and the A2 plan. The number of allocation guest rooms of the A1 plan is set to 5, the number of allocation guest rooms of the A2 plan is set to 2 and the number of allocation guest rooms of the guest room type T1 is set to 5. Meanwhile, the reservation number of the A1 plan is 2, and the reservation number of the A2 plan is 1. In this case, the vacancy number of the guest room type T1 is 2. In this case, the vacancy number of the A1 plan is 2, and the vacancy number of the A2 plan is 1.

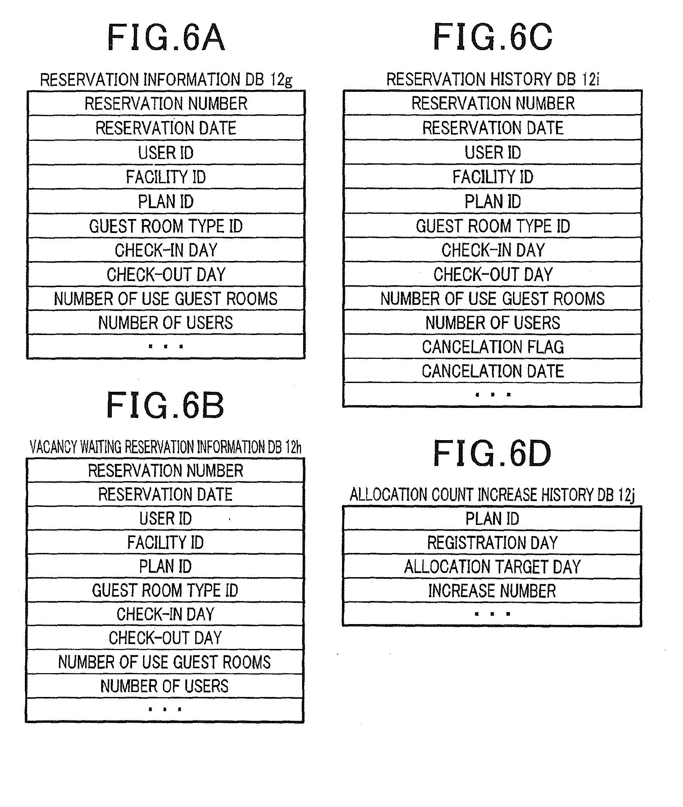

Fig. 6A is a view illustrating an example of content registered in the reservation information DB 12g according to the present embodiment. In the reservation information DB 12g, reservation information related to content of reservations of accommodation plans is registered. More specifically, in the reservation information DB 12g, for example, a reservation number, a reservation date, a user ID, a facility ID, a plan ID, a guest room type ID, a check-in day, a check-out day, the number of use guest rooms and the number of users are associated and registered per reservation. The reservation number is a number for identifying a reservation. The reservation date is a date on which a reservation is made. The user ID is a user ID of a user who makes a reservation. The facility ID is a facility ID of an accommodation facility which provides a reserved accommodation plan. The plan ID is a plan ID of a reserved accommodation plan. The guest room type ID is a guest room type ID of a guest room type of a reserved accommodation plan. The reservation information is deleted from the reservation information DB 12g when a check-in day passes or a reservation is canceled.

Fig. 6B is a view illustrating an example of content registered in the vacancy waiting reservation information DB 12h according to the present embodiment. In the vacancy waiting reservation information DB 12h, reservation information related to content of vacancy waiting reservations of accommodation plans is registered. More specifically, the vacancy waiting reservation information DB 12h, for example, a reservation number, a reservation date, a user ID, a facility ID, a plan ID, a guest room type ID, a check-in day, a check-out day, the number use guest rooms and the number of users are associated and registered per reservation.

Fig. 6C is a view illustrating an example of content registered in the reservation history information DB 12i according to the present embodiment. In the reservation history information DB 12i, a reservation history which is a history of reservations of accommodation plans is registered. More specifically, in the reservation history information DB 12i, for example, a reservation number, a reservation date, a user ID, a facility ID, a plan ID, a guest room type ID, a check-in day, a check-out day, the number of use guest rooms, the number of users, a cancelation flag and a cancelation date are associated and registered per reservation. The cancelation flag is information which indicates whether or not a reservation associated with a reservation number is canceled. When the cancelation flag is set to off, the reservation is not canceled. Meanwhile, when the cancelation flag is set to on, the reservation is canceled. The cancelation date is registered only when the cancelation flag is set to on. The cancelation date indicates when cancelation is made.

Fig. 6D is a view illustrating an example of content registered in the allocation count increase history DB 12j according to the present embodiment. In the allocation count increase history DB 12j, an allocation count increase history which is a history of an increase in the number of allocation guest rooms from an accommodation facility side is registered. More specifically, in the allocation count increase history DB 12j, for example, a plan ID, a registration day, an allocation target day and an increase number are associated and registered. The plan ID is a plan ID of an accommodation plan the number of guest rooms of which increases. The registration day is a day on which an increase of an allocation number of the number of guest rooms is registered. An allocation target day is a day of an increase target of the number of guest rooms. There may be a plurality of allocation target days. The increase number is the increased number of guest rooms.

An accommodation facility side operates the accommodation facility terminal 2 to, for example, input a plan ID, a registration day, an allocation target day and an increase number. Then, the accommodation facility terminal 2 sends the inputted information to the accommodation facility reservation server 1. The system control unit 14 registers the received information in the increase history DB 12j as an allocation count increase history. Further, the system control unit 14 adds the received increase number to the number of allocation guest rooms and the vacancy number registered in the accommodation plan vacancy information DB 12f in association with the received plan ID and an allocation target day. Furthermore, the system control unit 14 acquires the type ID associated with the received plan ID from the accommodation plan information DB 12d. Still further, the system control unit 14 adds the received increase number to the number of allocation guest rooms and the vacancy number registered in the guest room type vacancy information DB 12e in association with the acquired plan ID and the received allocation target day.

Next, other pieces of information stored in the memory unit 12 will be described. In the memory unit 12, a cancelation occurrence score determining primary table, a cancelation occurrence score determining secondary table and an allocation increase occurrence score determining table are stored. These tables are table information for determining vacancy occurrence scores.

The cancelation occurrence score determining primary table is table information for determining a primary score corresponding to a probability that one guest room is canceled by a check-in day. More specifically, the cancelation occurrence score determining primary table is a two-dimensional array with a primary score stored in association with a past cancelation rate and the number of remaining days. When the primary score is higher, the cancelation probability becomes higher. The cancelation rate indicates to what rate one room of a guest room reserved in the past is canceled a day. The cancelation rate is calculated based on a reservation history. When the cancelation rate is higher, a corresponding primary score is higher. The cancelation rate is basic information for determining a cancelation occurrence score. The primary score has a significant influence on the cancelation rate in particular. This is because, when the past cancelation rate is greater, the cancelation rate is higher in the future. The number of remaining days is the number of days from a search day (today) of an accommodation plan to a check-in day. When the number of remaining days is greater, a corresponding primary score is higher.

The cancelation occurrence score determining secondary table is a table for determining a cancelation occurrence score corresponding to the probability that the number of guest rooms to be canceled by the check-in day becomes the required number or more. More specifically, the cancelation occurrence score determining secondary table is a three-dimensional array with a cancelation occurrence score stored in association with a primary score range, the reservation number and a required increase number. When the cancelation occurrence score is higher, the number of guest rooms to be canceled is greater, and the probability that the number of empty guest rooms becomes the required number or more becomes higher. When the primary score is higher, a corresponding cancelation occurrence score is higher. The cancelation occurrence score has a significant influence from a primary score in particular. The reservation number is the total number of guest rooms reserved at a current point of time. When the reservation number is higher, a corresponding cancelation occurrence score is higher. The required increase number is an increase number of vacancy required such that the vacancy number becomes the required number or more. When the required increase number is higher, a corresponding cancelation occurrence score is lower.

The allocation increase occurrence score determining table is a table for determining an allocation increase occurrence score corresponding to a probability that the increase number of allocation of guest rooms becomes the required number or more by the check-in day. More specifically, the allocation increase occurrence score determining table is a three-dimensional array with the cancelation occurrence score stored in association with a past allocation increase rate range, the number of remaining days and the required increase number. When the allocation increase occurrence score is higher, the probability that the increase number becomes the required number or more is higher. The allocation increase rate indicates at what rate per day the number of guest rooms increases following an increase in the number of guest rooms allocated in the past by an accommodation facility side. The allocation increase rate is calculated based on an allocation count increase history. When the allocation increase rate is higher, a corresponding allocation increase occurrence score is higher. The allocation increase rate is basic information for determining an allocation increase occurrence score. The allocation increase occurrence score has a significant influence from an allocation increase rate in particular. This is because it is considered that when the number of times or the frequency that the number of allocation of guest rooms in the past increased is higher, or when the quantity of an increase in the number of allocation of guest rooms in the past is higher, an increase in the future is higher. When the number of remaining days is higher, a corresponding allocation increase occurrence score is higher. Further, when the required increase number is higher, a corresponding allocation increase occurrence score is lower.

Furthermore, the memory unit 12 stores the vacancy occurrence probability information determining table. The vacancy occurrence probability information determining table is table information for determining the vacancy occurrence probability information 234. More specifically, the vacancy occurrence probability information determining table is a one-dimensional array with the vacancy occurrence probability information 234 stored in association with the vacancy occurrence score range. When the vacancy occurrence score is higher, the vacancy occurrence probability information 234 which indicates a higher probability is stored.

Further, in the memory unit 12, various items of data such as HTML document, XML document, image data, text data and electronic document for displaying webpages are stored. Furthermore, in the memory unit 12, various setting values set by, for example, an administrator are stored.

Still further, in the memory unit 12, various programs such as an operating system, a WWW (World Wide Web) server program, a DBMS (DataBase Management System) and an accommodation facility reservation processing program (including an example of an information providing program according to the present invention) are stored. The accommodation facility reservation processing program is a program for executing processing such as search for an accommodation plan, estimation of the probability that the vacancy number becomes the required number or more and reservation of an accommodation plan. In addition, various programs may be acquired from other server apparatus through the network NW or may be recorded in a recording medium such as a DVD (Digital Versatile Disc) and read through a drive apparatus.

The input/output interface 13 performs interface processing between the communication unit 11 and the memory unit 12, and the system control unit 14.

The system control unit 14 is formed with, for example, a CPU 14a, a ROM (Read Only Memory) 14b and a RAM (Random Access Memory) 14c. Further, when the CPU 14a reads and executes various programs, the system control unit 14 functions as a remaining count acquiring means, a history acquiring means, an estimating means, a providing means, an acquiring means, a day count acquiring means, a reservation information acquiring means, a user identification information acquiring means and a reservation history acquiring means according to the present invention.

In addition, the accommodation facility reservation server 1 may be configured by a plurality of server apparatuses. For example, a server apparatus which performs processing related to, for example, search for an accommodation plan, estimation of a probability that a vacancy number becomes a required number or more and reservation of an accommodation plan, a server apparatus which transmits a webpage according to a request from the user terminal 3 and a server apparatus which manages a database may be connected to each other through a LAN.

### [3. Operation of accommodation facility reservation system]

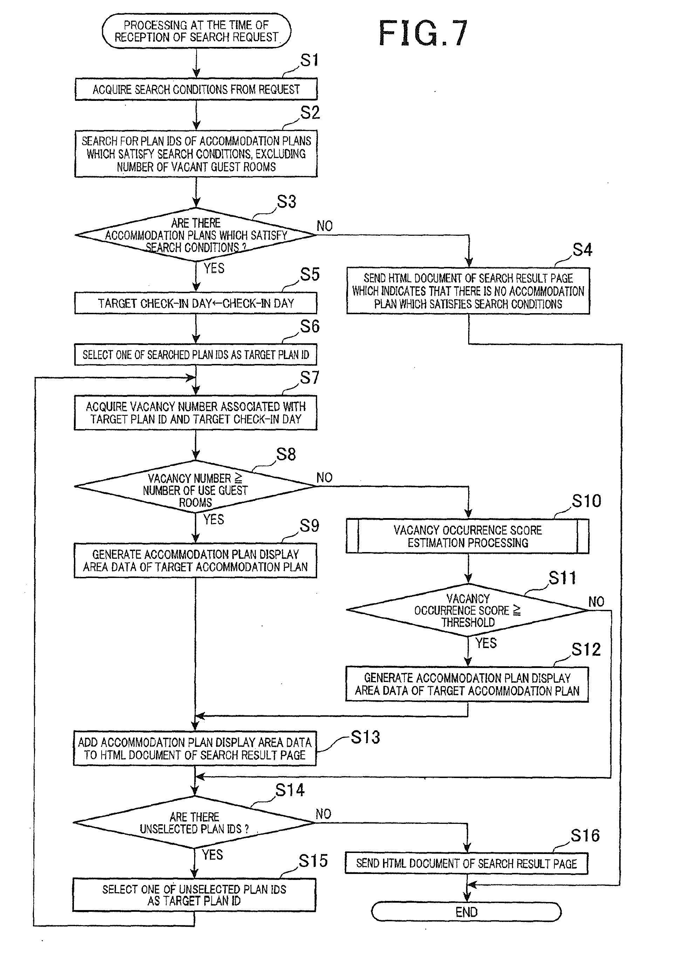

Next, an operation of the accommodation facility reservation system S will be described using Figs. 7 to 13.

Fig. 7 is a flowchart illustrating a processing example of processing at the time of reception of a search request in the system control unit 14 of the accommodation facility reservation server 1 according to the present embodiment.

For example, the user inputs search conditions such as a check-in day, a check-out day and the number of use guest rooms in an accommodation facility site. Then, the user terminal 3 sends a search request including the input search conditions to the accommodation facility reservation server 1. The processing upon reception of a search request is started when the accommodation facility reservation server 1 receives a search request.

First, the system control unit 14 acquires the search conditions from the received search request (step S1). Next, the system control unit 14 searches for plan IDs of accommodation plans which satisfy the acquired search conditions (step S2). For example, the system control unit 14 searches for the plan IDs of the accommodation plans satisfying the search conditions, based on information registered in, for example, the accommodation facility information DB 12b, the guest room information DB 12c, the accommodation plan information DB 12d and the accommodation plan vacancy information DB 12f.

Next, the system control unit 14 decides whether or not the plan IDs of the accommodation plans satisfying the search conditions are searched (step S3). In this case, when deciding that the plan IDs of the accommodation plans satisfying the search conditions are not searched (step S3: NO), the system control unit 14 sends HTML document of a search result page which displays that there is no accommodation plan satisfying the search conditions, to the user terminal 3 which is a transmission source of the search request (step S4). When finishing this processing, the system control unit 14 finishes the processing upon reception of the search request.

Meanwhile, when deciding that the plan IDs of the accommodation plans satisfying the search conditions are searched (step S3: YES), the system control unit 14 acquires from the memory unit 12 a template of the HTML document of the search result page. Further, the system control unit 14 sets a check-in day included in the search conditions as a target check-in day which is a calculation target of a vacancy occurrence score (step S5). Next, the system control unit 14 selects one of the searched plan IDs as a target plan ID (step S6). In addition, an accommodation plan associated with the target plan ID is referred to as a "target plan".

Next, the system control unit 14 acquires the vacancy number associated with the target plan ID and the target check-in day from the accommodation plan vacancy information DB 12f (step S7).

Next, the system control unit 14 decides whether or not the vacancy number acquired in step S7 is the number of use guest rooms or more included in the search conditions (step S8). In this case, when deciding that the vacancy number is the number of use guest rooms or more (step S8: YES), the system control unit 14 generates accommodation plan display area data of the target plan (step S9). The accommodation plan display area data is a part of the HTML document for displaying the accommodation plan display area 100 in the search result page. When finishing the processing in step S9, the system control unit 14 proceeds to step S13. In addition, although, when the whole vacancy number from a check-in day to a check-out day is not actually the number of use guest rooms or more, a reservation for this number of use guest rooms cannot be made, a simple method in the present embodiment decides only the vacancy number of a check-in day. In step S8, the system control unit 14 may decide whether or not the whole vacancy number from the check-in day to the check-out day is the number of use guest rooms or more.

When deciding in step S8 that the vacancy number is not the number of use guest rooms or more (step S8: NO), the system control unit 14 executes vacancy occurrence score estimation processing described below (step S10). In the vacancy occurrence score estimation processing, a target plan vacancy occurrence score is determined.

Next, the system control unit 14 decides whether or not the vacancy occurrence score determined in the vacancy occurrence score estimation processing is a score comparing threshold stored in the memory unit 12 or more (step S11). In this case, when deciding that the vacancy occurrence score is the threshold or more (step S11: YES), the system control unit 14 generates the target plan accommodation plan display area data (step S12). Next, the system control unit 14 proceeds to step S13.

In step S13, the system control unit 14 adds the accommodation plan display area data generated in step S9 or step S13, to the template of the HTML document of the search result page. Next, the system control unit 14 proceeds to step S14.

When deciding in step S11 that the vacancy occurrence score is not the threshold or more (step S11: NO), the system control unit 14 proceeds to step S14 without generating the accommodation plan display area data.

In step S14, the system control unit 14 decides whether or not there are unselected plan IDs among the searched plan IDs. In this case, when deciding that there are the unselected plan IDs (step S14: YES), the system control unit 14 selects one of the unselected plan IDs (step S15). Next, the system control unit 14 proceeds to step S7.

Meanwhile, when deciding that all plan IDs are selected (step S14: NO), the system control unit 14 sends the HTML document of the search result page completed when the accommodation plan display area data is added, to the user terminal 3 which is the transmission source of the search request (step S16). When finishing this processing, the system control unit 14 finishes the processing upon reception of the search request.

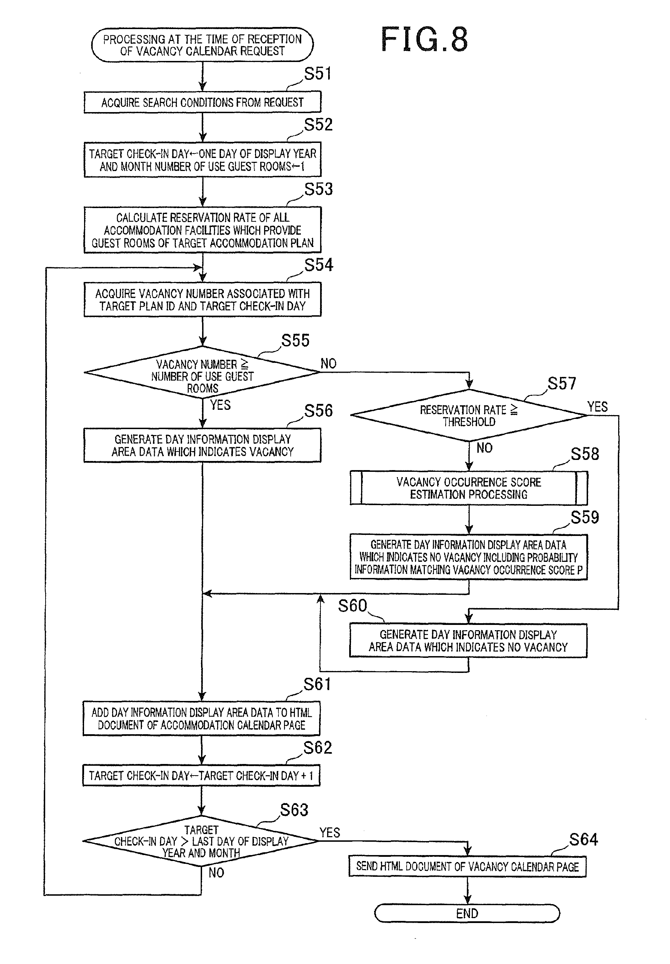

Fig. 8 is a flowchart illustrating a processing example of processing at the time of reception of a vacancy calendar request in the system control unit 14 of the accommodation facility reservation server 1 according to the present embodiment.

When, for example, the user selects the vacancy calendar button 160 displayed in one accommodation plan display area 100 in a search result page or a plan list page of each facility, or when the user selects the previous month link 210 or the next month link 220 displayed in the vacancy calendar page, the user terminal 3 sends the vacancy calendar request including a corresponding plan ID of an accommodation plan and a corresponding year and month (referred to as a "display year and month" below) to the accommodation facility reservation server 1. In addition, when the vacancy calendar button 160 is selected, a current year and month is a display year and month. The processing upon reception of the vacancy calendar request is started when the accommodation facility reservation server 1 receives the vacancy calendar request.

First, the system control unit 14 acquires the plan ID included in the vacancy calendar request as a target plan ID, and acquires the display year and month (step S51). Further, the system control unit 15 acquires from the memory unit 12 the template of the HTML document of the vacancy calendar page. Next, the system control unit 14 sets one day of the display year and month to the target check-in day. Further, the system control unit 14 sets 1 as the number of use guest rooms (step S52). In addition, when the display year and month is the current year and month, the target check-in day is a today's date.

Next, the system control unit 14 calculates the reservation rates of guest rooms of accommodation facilities which are display targets of the vacancy calendar page (step S53). For example, the system control unit 14 acquires the facility ID associated with the target plan ID, from the accommodation plan information DB 12d. Next, the system control unit 14 acquires all guest room type IDs associated with the acquired facility ID, from the guest room information DB 12c. Next, the system control unit 14 acquires from the guest room type vacancy information DB 12e all allocation vacancy numbers and vacancy numbers from the first day to the last day of the display year and month among numbers of allocation guest rooms and the vacancy numbers associated the acquired respective guest room type IDs. Next, the system control unit 14 calculates the total number of allocation guest rooms by adding up all numbers of acquired allocation guest rooms, and calculates the total vacancy number by adding up all acquired vacancy numbers. Further, the system control unit 14 calculates the reservation rate by dividing the total vacancy number by the total number of allocation guest rooms.

Next, the system control unit 14 acquires from the accommodation plan vacancy information DB 12f the vacancy number associated with the target plan ID and the target check-in day (step S54). Next, the system control unit 14 decides whether or not the acquired vacancy number is the number of use guest rooms or more (step S55). In this case, when deciding that the vacancy number is the number of use guest rooms or more (step S55: YES), the system control unit 14 generates day information display area data of the target check-in day (step S56). The day information display area data is a part of HTML document for displaying the day information display area 230 in a vacancy calendar page. The system control unit 14 generates the day information display area data such that the target check-in day is displayed as the date 231 and "○" is displayed as the vacancy status information 232. When finishing the processing in step S56, the system control unit 14 proceeds to step S61.

Meanwhile, when deciding that the vacancy number is not the number of use guest rooms or more (step S55: NO), the system control unit 14 decides whether or not the reservation rate calculated in step S53 is the threshold or more stored in the memory unit 12 (step S57). In this case, when deciding that the reservation rate is not the threshold or more (step S57: NO), the system control unit 14 executes the vacancy occurrence score estimation processing (step S58). Next, the system control unit 14 generates day information display area data of the target check-in day (step S59). In this case, the system control unit 14 generates the day information display area data such that "×" is displayed as the vacancy status information 232. Further, the system control unit 14 acquires the vacancy occurrence probability information 234 associated with the vacancy occurrence score calculated in the vacancy occurrence score estimation processing, from the vacancy occurrence probability information determining table, and generates the day information display area data such that the acquired vacancy occurrence probability information 234 is displayed. When finishing the processing in step S59, the system control unit 14 proceeds to step S61.

When deciding in step S57 that the reservation rate is the threshold or more (step S57: YES), the system control unit 14 generates the day information display area data of the target check-in day (step S60). In this case, the system control unit 14 generates the day information display area data such that "×" is displayed as the vacancy status information 232. Further, the system control unit 14 generates the day information display area data such that the vacancy occurrence probability information 234 is not displayed. When finishing the processing in step S60, the system control unit 14 proceeds to step S61.

In step S61, the system control unit 14 adds the day information display area data generated in step S56, S59 or S60, to the template of the HTML document of the vacancy calendar page. Next, the system control unit 14 adds 1 to the target check-in day (step S62). Next, the system control unit 14 decides whether or not the target check-in day passes the last day of the display year and month (step S63). In this case, when deciding that the target check-in day does not pass the last day of the display year and month (step S63: NO), the system control unit 14 proceeds to step S54.

Meanwhile, when deciding that the target check-in day passes the last day of the display year and month (step S63: YES), the system control unit 14 sends the HTML document of the vacancy calendar page completed when the day information display area data is added, to the user terminal 3 which is the transmission source of the vacancy calendar request (step S64). When finishing this processing, the system control unit 14 finishes the processing upon reception of the vacancy calendar request.

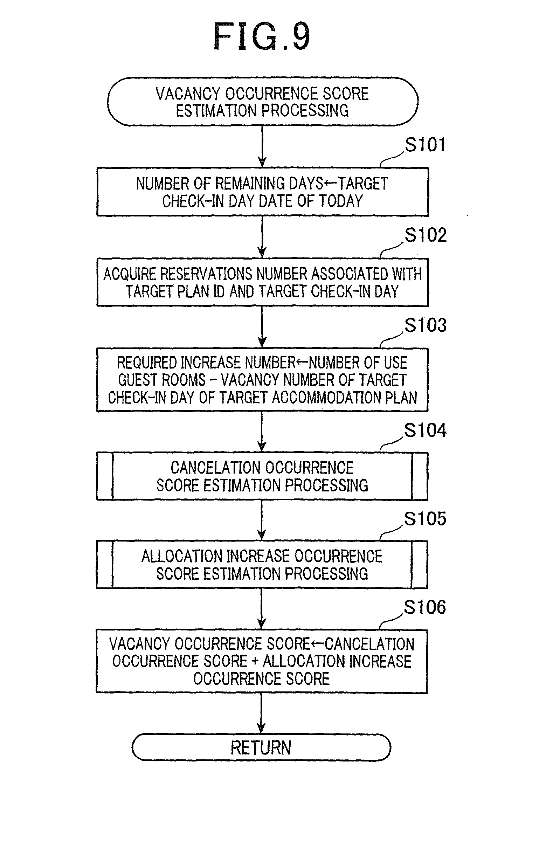

Fig. 9 is a flowchart illustrating a processing example of vacancy occurrence score estimation processing of the system control unit 14 of the accommodation facility reservation server 1 according to the present embodiment.

First, the system control unit 14 calculates the number of remaining days by subtracting a today's date from the target check-in day (step S101). Next, the system control unit 14 acquires the reservation number associated with the target plan ID and the target check-in day (step S102). Next, the system control unit 14 calculates the required increase number (step S103). More specifically, the system control unit 14 calculates the required increase number by subtracting the vacancy number associated with the target plan ID and the target check-in day, from the number of use guest rooms.

Next, the system control unit 14 executes the cancelation occurrence score estimation processing described below (step S104). In the cancelation occurrence score estimation processing, a target plan cancelation occurrence score is determined. Next, the system control unit 14 executes allocation increase occurrence score estimation processing described below (step S105). In the allocation increase occurrence score estimation processing, a target plan allocation increase occurrence score is determined. Next, the system control unit 14 calculates the vacancy occurrence score by adding the allocation increase occurrence score determined in the allocation increase occurrence score estimation processing, to the cancelation occurrence score determined in the cancelation occurrence score estimation processing (step S106). When finishing this processing, the system control unit 14 finishes the vacancy occurrence score estimation processing.

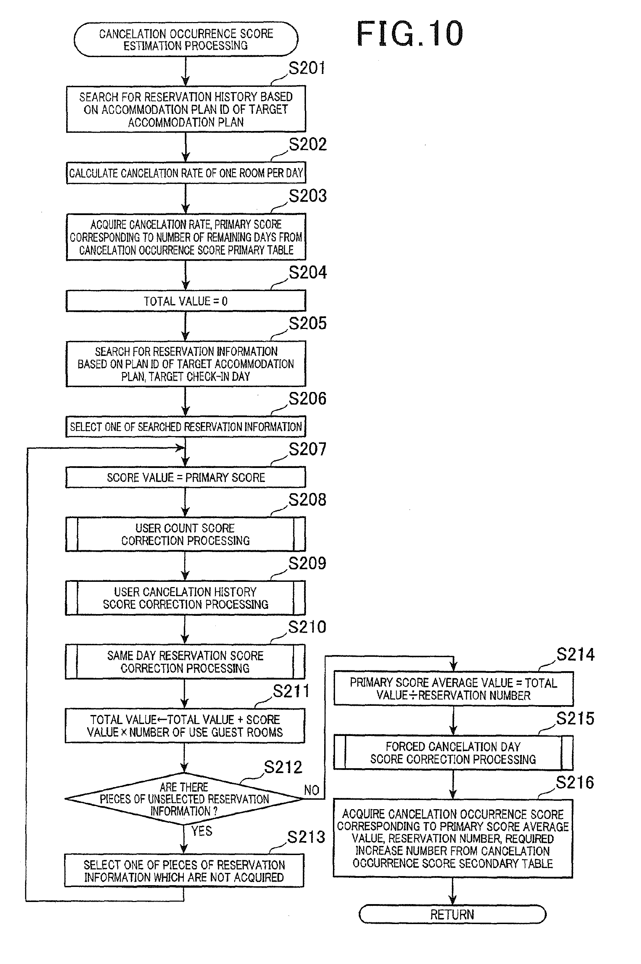

Fig. 10 is a flowchart illustrating a processing example of cancelation occurrence score estimation processing of the system control unit 14 of the accommodation facility reservation server 1 according to the present embodiment.

First, the system control unit 14 searches for a reservation history associated with the target plan ID from the reservation history DB 12f (step S201). In this case, the system control unit 14 may search only for, for example, a reservation history of reservations made between today and a predetermined number of days before today, or search only for a reservation history between today and a predetermined number of days before or after on the same day in a previous year or before.

Next, the system control unit 14 calculates a cancelation rate of one room per day based on the searched reservation history (step S202). More specifically, the system control unit 14 calculates the total number of reserved guest rooms based on the number of use guest rooms included in the searched reservation history. Further, the system control unit 14 calculates the total number of guest rooms reservations of which are canceled, based on the number of use guest rooms and cancelation flags included in the reservation history. Next, the system control unit 14 calculates the cancelation rate per room by dividing the total number of guest rooms reservations of which are canceled by the total number of reserved guest rooms. Next, the system control unit 14 calculates the number of elapsed days passed from reservation to cancelation. To describe in more detail, the system control unit 14 calculates the number of elapsed days by subtracting a reservation day from a cancelation day included in the reservation information in which a cancelation flag is set to on. Next, the system control unit 14 calculates a total value by adding up the total number of elapsed days by multiplying total numbers of calculated elapsed days by the number of use guest rooms. Next, the system control unit 14 calculates the cancelation rate of one room per day by dividing the cancelation rate of one room by the total value of the numbers of elapsed days.

Next, the system control unit 14 acquires from the cancelation occurrence score determining primary table a primary score associated with the cancelation rate of one room per day and the number of remaining days (step S203).

Next, the system control unit 14 corrects the primary score based on a condition of each current reservation the check-in day of which is a target check-in day. First, the system control unit 14 sets 0 to the primary score total value (step S204). Next, the system control unit 14 searches for reservation information associated with the target plan ID and the target check-in day, from the reservation information DB 12g (step S205). Next, the system control unit 14 selects one of pieces of the searched reservation information (step S206). Next, the system control unit 14 sets the primary score acquired in step S203, to the score value (step S207).

Next, the system control unit 14 executes user count score correction processing, user cancelation history score correction processing and same day reservation score correction processing described below (steps S208 to S210). In each correction processing, a score value is corrected. Next, the system control unit 14 multiplies the score value by the number of use guest rooms included in selected reservation information, and adds this result to a score total value (step S211).

Next, the system control unit 14 decides whether or not there are pieces of unselected reservation information among the searched reservation information (step S212). In this case, when deciding that there are pieces of unselected reservation information (step S212: YES), the system control unit 14 selects one of pieces of unselected reservation information (step S213). Next, the system control unit 14 proceeds to step S207.

Meanwhile, when deciding that all pieces of reservation information are selected (step S212: NO), the system control unit 14 calculates a primary score average value by dividing the primary score total value by the reservation number (step S214). Next, the system control unit 14 executes forced cancelation day score correction processing described below (step S215). In the forced cancelation day score correction processing, the primary score average value is corrected.

Next, the system control unit 14 acquires a cancelation occurrence score associated with the primary score average value, the reservation number and the required increase number, from the cancelation occurrence score determining secondary table (step S216). When finishing this processing, the system control unit 14 finishes the cancelation occurrence score estimation processing.

In addition, in Fig. 10, the system control unit 14 has estimated the probability that the reservation of only the target plan is canceled. However, the system control unit 14 may estimate a probability that a reservation of an accommodation plan to which the same guest room type as a guest room type allocated to the target plane is also canceled. For example, guest rooms of the guest room type T1 are allocated to the A1 plan and the A2 plan, and the number of allocation guest rooms of the A1 plan is set to 5, the number of allocation guest rooms of the A2 plan is set to 5 and the number of allocation guest rooms of the guest room type T1 is set to 8. Further, the reservation number of the A1 plan is 3, and the reservation number of A2 plan is 5. In this case, the vacancy numbers of the A1 plan and the A2 plan are 0. Meanwhile, when one reservation of the A2 plan is canceled, the vacancy number of the guest room type T1 is 1. The guest rooms of the guest room type T1 can be allocated to the A1 plan, so that the vacancy number of the A1 plan increases to 1. Hence, in this case, the system control unit 14 may add the probability that the reservation of the A2 plan is canceled, to the probability that the reservation of the A1 plan is canceled. Meanwhile, even when the reservation of the A2 plan is canceled, the vacancy number of the A2 plan does not increase. This is because the reservation number of the A2 plan reaches the number of allocation guest rooms of the A2 plan.

Further, upon calculation of the cancelation rate of one room per day, the system control unit 14 has calculated the cancelation rate based only on the reservation history associated with the target plan. However, the system control unit 14 may calculate the cancelation rate based on, for example, a reservation history associated with all accommodation plans provided by accommodation facilities which provide the target plan.

Fig. 11A is a flowchart illustrating a processing example of user count score correction processing of the system control unit 14 of the accommodation facility reservation server 1 according to the present embodiment.

First, the system control unit 14 decides whether or not the number of users included in the selected reservation information is 1 (step S251). In this case, when deciding that the number of users is not 1 (step S251: NO), the system control unit 14 finishes the user count score correction processing.

Meanwhile, when deciding that the number of users is not 1 (step S251: YES), the system control unit 14 adds a correction value 1 stored in the memory unit 12 to the score value (step S252). That is, the system control unit 14 increases a probability that a reservation the number of users of which is 1 is canceled. When the number of users is 1, an accommodation service is more likely to be used for a business purpose compared to when the number of users is 2 or more. Further, in case of the business purpose, a schedule is more likely to be changed for the sake of business compared to, for example, a purpose of leisure. Therefore, the accommodation service is more highly likely to be canceled following the change of the schedule. When finishing the processing in step S252, the system control unit 14 finishes the user count score correction processing. In addition, a score value may be corrected by a correction value associated with the number of users by storing the correction value in the memory unit 12 in advance per number of users.

Fig. 11B is a flowchart illustrating a processing example of user cancelation history score correction processing of the system control unit 14 of the accommodation facility reservation server 1 according to the present embodiment.

First, the system control unit 14 acquires a user ID from the selected reservation information, and searches for the reservation history including the acquired user ID, from the reservation history DB 1h. Next, the system control unit 14 acquires the number of users from the selected reservation information, and searches for the reservation history including the acquired number of users from the searched reservation history (step S261).

Next, the system control unit 14 calculates a past cancelation rate of a user associated with the acquired user ID (step S262). More specifically, the system control unit 14 calculates the total number of reservations made by the user associated with the user ID and the total number of canceled reservations based on a cancelation flag included in the reservation history searched in step S262. Next, the system control unit 14 calculates the cancelation rate by dividing the total number of canceled reservations by the total number of reservations.

Next, the system control unit 14 calculates the correction value 2 based on the calculated cancelation rate (step S263). For example, the system control unit 14 calculates the correction value 2 by subtracting a reference value stored in the memory unit 12 from the cancelation rate, and multiplying this result by a count stored in the memory unit 12.

Next, the system control unit 14 adds the calculated correction value 2 to the score value (step S264). That is, when the past cancelation rate of the user who made a reservation is higher, the system control unit 14 increases the probability that the reservation is canceled. Meanwhile, the number of users of a past reservation a cancelation rate of which is calculated is the same as the number of users of a current reservation because, for example, what a use purpose of an accommodation service is or whether or not a user can feel free to cancel an accommodation service changes depending on the number of users. In addition, the system control unit 14 may calculate the cancelation rate based on all reservation histories irrespectively of the number of users. When finishing the processing in step S264, the system control unit 14 finishes the user cancelation history score correction processing.

Fig. 11C is a flowchart illustrating a processing example of same-day reservation score correction processing of the system control unit 14 of the accommodation facility reservation server 1 according to the present embodiment.

First, the system control unit 14 acquires a user ID from the selected reservation information, searches for reservation histories including the acquired user ID from the reservation history DB 1h, and searches for reservation information the accommodation days of which overlap the selected reservation information from searched reservation histories (step S271). The accommodation days are respective days from a check-in day to a previous day of a check-out day.

Next, the system control unit 14 decides whether or not a plurality of pieces of reservation information is searched (step S272). In this case, when deciding that a plurality of reservation information is not searched (step S272: NO), the system control unit 14 finishes the same day reservation score correction processing.

Meanwhile, when deciding that a plurality of pieces of reservation information is searched (step S272: YES), the system control unit 14 adds a correction value 3 stored in the memory unit 12 to the score value (step S273). That is, when the user associated with the acquired user ID makes another reservation the accommodation days of which overlap a reserved target plan, the system control unit 14 increases the probability that the reservation of the target plan is canceled. This is because, when a single person makes a plurality of reservations, the person is likely to temporarily reserve a plurality of accommodation plans, and determine later an accommodation plan to actually use. In addition, the system control unit 14 may increase the probability that reservations are canceled when the number of reservations is higher. When finishing the processing in step S273, the system control unit 14 finishes the user count score correction processing.

Fig. 11D is a flowchart illustrating a processing example of forced cancelation day score correction processing of the system control unit 14 of the accommodation facility reservation server 1 according to the present embodiment.

First, the system control unit 14 acquires facility IDs associated with the target plan ID, from the accommodation plan information DB 12d, and acquires the number of forced cancelation days associated with the acquired facility ID, from the accommodation facility information DB 12b (step S281). Next, the system control unit 14 decides whether or not the number of remaining days is greater than the number of forced cancelation days (step S282). In this case, when deciding that the number of remaining days is not greater than the number of forced cancelation days (step S282: NO), the system control unit 14 finishes forced cancelation day score correction processing.

Meanwhile, when deciding that the number of remaining days is greater than the number of forced cancelation days (step S282: YES), the system control unit 14 adds a correction value 4 stored in the memory unit 12 to the primary score average value (step S283). That is, when the forced cancelation days are included between tomorrow and the target check-in day, the system control unit 14 increases the probability that a reservation is canceled. This is because when the forced cancellation day comes, a reservation conditions of which are not satisfied by the user who made the reservation is canceled. When finishing the processing in step S283, the system control unit 14 finishes the forced cancelation day score correction processing.

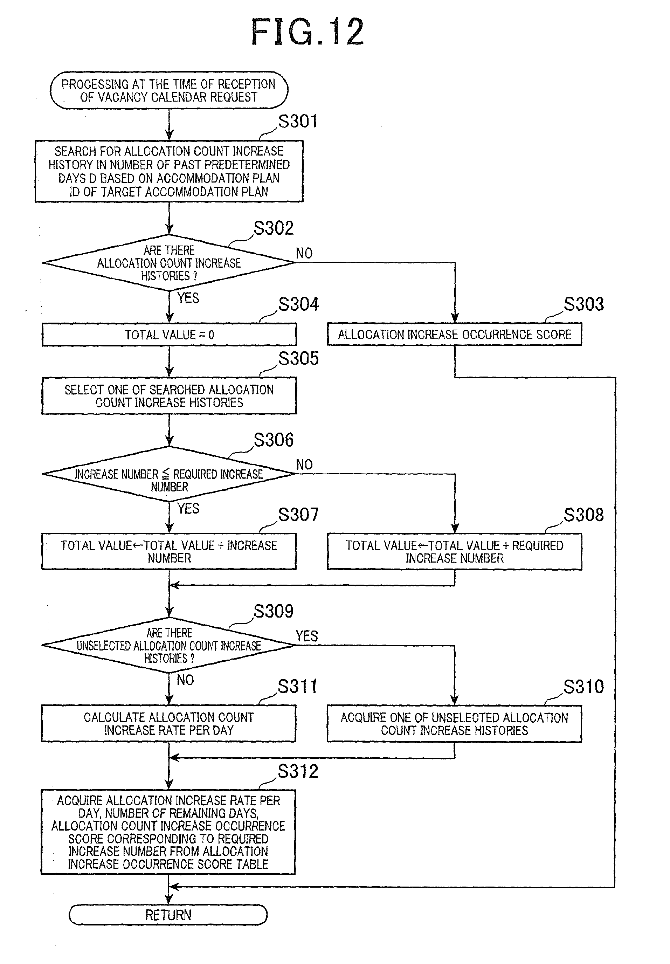

Fig. 12 is a flowchart illustrating a processing example of allocation increase occurrence score estimation processing of the system control unit 14 of the accommodation facility reservation server 1 according to the present embodiment.

First, the system control unit 14 searches from the allocation count increase history DB 12j for an allocation count increase history a registration day of which is included in a predetermined period among the allocation count increase histories associated with the target plan ID (step S301). In this case, the system control unit 14 may, for example, set a predetermined period which is a predetermined number of days before today or set a predetermined period which is a predetermined number of days before or after the same day as today in a previous year or before.

Next, the system control unit 14 decides whether or not the allocation count increase histories are searched (step S302). In this case, when deciding that the allocation count increase history is not searched (step S302: NO), the system control unit 14 sets 0 to the allocation increase occurrence score (step S303). When finishing this processing, the system control unit 14 finishes the allocation increase occurrence score estimation processing.

Meanwhile, when deciding that the allocation count increase history is searched (step S302: YES), the system control unit 14 calculates an allocation increase rate per day. First, the system control unit 14 sets 0 to the increase count total value (step S304). Next, the system control unit 14 selects one of the searched allocation count increase histories (step S305).

Next, the system control unit 14 decides whether or not the increase number included in the selected allocation count increase history is the required increase number or less (step S306). In this case, when deciding that the increase number is the required increase number or less (step S306: YES), the system control unit 14 adds the increase number included in the selected allocation number increase history to the increase number total value (step S307). Meanwhile, when deciding that the increase number is not the required increase number or less (step S306: NO), the system control unit 14 adds the required increase number to the increase number total value (step S308). The number of allocation of guest rooms corresponding to the required increase number only needs to increase to make the vacancy number reach the number of use guest rooms. Hence, even when the number of allocation increases more than the required increase number at once, the probability that the increase number of allocation of guest rooms becomes the required number or more does not become high. Processing in step S308 is processing for reflecting this. Hence, instead of the number of guest rooms which actually increases and is allocated by an accommodation facility, the frequency of an increase is preferentially reflected in the allocation increase occurrence score.

When finishing the processing in step S307 or S308, the system control unit 14 decides whether or not there are pieces of unselected allocation count increase histories among the searched allocation count increase histories (step S309). In this case, when deciding that there are the unselected allocation count increase histories (step S309: YES), the system control unit 14 selects one of unselected allocation count increase histories (step S310). Next, the system control unit 14 proceeds to step S306.

Meanwhile, when deciding that all allocation count increase histories are selected (step S309: NO), the system control unit 14 calculates the allocation increase rate per day by dividing the increase count total value by the number of days of a predetermined period used upon search in step S301 (step S311).

Next, the system control unit 14 acquires the allocation increase occurrence score corresponding to the allocation increase rate per day, the number of remaining days and the required increase number, from the allocation increase occurrence score determining table (step S312). When finishing this processing, the system control unit 14 finishes the allocation increase occurrence score estimation processing.

In addition, when the reservation rate of guest rooms at an accommodation facility which provides a target plan is a value (for example, 90%) set in advance or more and when a rate (referred to as an "allocation rate" below) of the number of guest rooms which are currently allocated to the accommodation facility reservation site by the accommodation facility is lower with respect to the total number of guest rooms of the accommodation facility, the system control unit 14 may determine an increase occurrence score such that the allocation increase occurrence score becomes higher. In such a case, as the reservation rate at the accommodation facility reservation site is high, the accommodation facility side is likely to decide to increase the number of guest rooms to allocate to the accommodation facility reservation site. Further, when the allocation rate is lower, the number of allocation of guest rooms to the accommodation facility reservation site is likely to be become high. A method of determining an allocation increase occurrence score in this case includes, for example, storing in the memory unit 12 in advance a first allocation increase occurrence score determining table which stores each allocation increase occurrence score in association only with an allocation increase rate, the number of remaining days and the required increase number, and a second allocation increase occurrence score determining table which stores an allocation increase occurrence score in association with an allocation increase rate, the number of remaining days, the required increase number and an allocation rate. When the reservation rate is less than a value set in advance, the system control unit 14 determines the allocation increase occurrence score using the first allocation increase occurrence score determining table, and, when the reservation rate is the value set in advance or more, determines the allocation increase occurrence score using the second allocation increase occurrence score determining table. The total number of guest rooms at an accommodation facility can be acquired from the accommodation facility information DB 12b. Further, a method of calculating the reservation rate may be the same as that in step S53 in the processing upon reception of the vacancy calendar request illustrated in Fig. 8.

Furthermore, in the allocation increase occurrence score estimation processing, the system control unit 14 may determine the allocation increase occurrence score according to the method described below. First, the system control unit 14 sets an initial value (for example, 0) to the target plan allocation increase occurrence score. Next, the system control unit 14 searches for the target plan allocation count increase history from the allocation count increase history DB 12j. When the allocation count increase history is not searched as a result of search, the system control unit 14 determines a current allocation increase occurrence score as a final allocation increase occurrence score. Meanwhile, when the allocation count increase history is searched, the system control unit 14 adds a predetermined value (for example, 1) to the allocation increase occurrence score. There is a record of an increase in the number of allocation of the target plan, so that the allocation increase occurrence score is increased.

Next, the system control unit 14 calculates the number of required days from registration to a check-in day which is an increase target of the number of guest rooms by subtracting a registration day from an allocation target day included in the searched allocation count increase history. Next, the system control unit 14 decides whether or not the calculated number of required days is less than the number of remaining days from today to the target check-in day. In this case, when deciding that the number of required days is not less than the number of remaining days, the system control unit 14 determines the current allocation increase occurrence score as a final allocation increase occurrence score. Meanwhile, when deciding that the number of required days is less than the number of remaining days, the system control unit 14 adds a predetermined value to the allocation increase occurrence score. When the number of required days is less than the number of remaining days, if an increase in the number of allocation of guest rooms is registered on or after today, the allocation target day is highly likely to be the target check-in day, so that the allocation increase occurrence score is increased.

Next, the system control unit 14 decides whether or not the increase number included in the searched allocation count increase history is the number of use guest rooms or more. In this case, when deciding that the increase number is not the number of use guest rooms or more, the system control unit 14 determines a current allocation increase occurrence score as a final allocation increase occurrence score. Meanwhile, when deciding that the increase number is the number of use guest rooms or more, the system control unit 14 adds the predetermined value to the allocation increase occurrence score. There is a record that the number of the guest rooms of the target plan increases more than the number of use guest rooms, so that the allocation increase occurrence score is increased. The system control unit 14 determines this allocation increase occurrence score as a final allocation increase occurrence score.

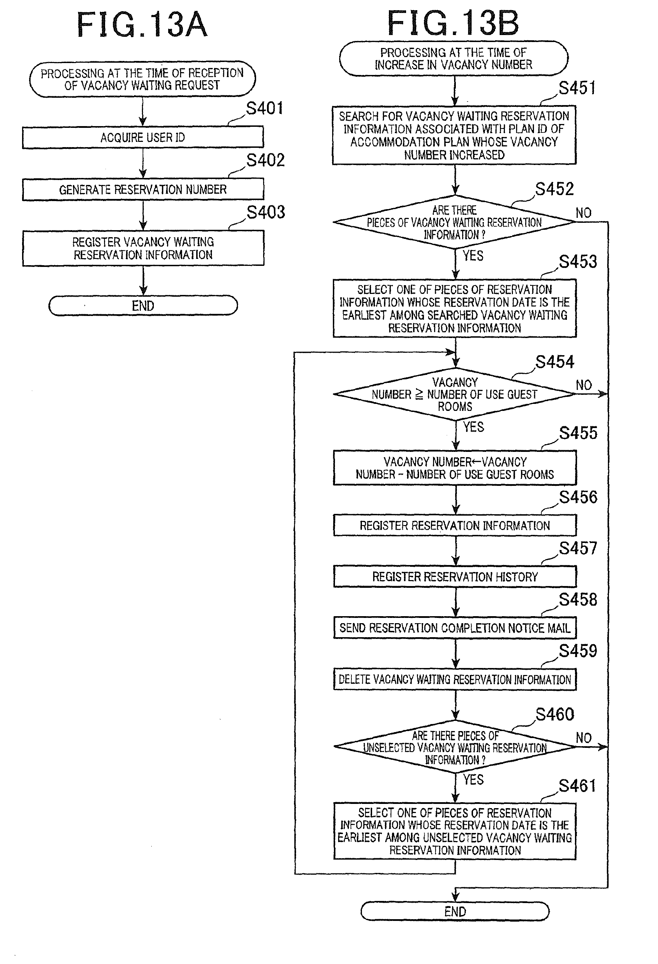

Fig. 13A is a flowchart illustrating a processing example of processing at the time of reception of a vacancy waiting reservation request in the system control unit 14 of the accommodation facility reservation server 1 according to the present embodiment.

When a search result page is displayed on the user terminal 3, a webpage is displayed which allows the user to select the reservation button 150 of the accommodation plan display area 100 of an accommodation plan without vacancy, input information required to make a vacancy waiting reservation when selecting to wait for cancelation, and confirm reservation content. Further, when the vacancy calendar page is displayed on the user terminal 3, even if the user selects the vacancy status information 232 which indicates "×", the same webpage is displayed. Then, when the user performs an operation of, for example, inputting various pieces of information to determine a reservation, the user terminal 3 sends a vacancy waiting reservation request including a plan ID, a check-in day, a check-out day, the number of use guest rooms and the number of users of an accommodation plan to reserve. The processing upon reception of the vacancy waiting reservation request is started when the accommodation facility reservation server 1 receives the vacancy waiting reservation request.

First, the system control unit 14 acquires the user ID of the user terminal 3 which has sent the vacancy waiting reservation request (step S401). The system control unit 14 receives and holds the user ID of the user terminal 3 by session management based on, for example, a pre-log-in operation by the user. Then, the system control unit 14 acquires a user ID associated with the user terminal 3 which has sent the vacancy waiting reservation request from the session management.

Next, the system control unit 14 generates a new reservation number (step S402). Next, the system control unit 14 generates vacancy waiting reservation information based on information included in the vacancy waiting reservation request and the new reservation number, and registers the generated vacancy waiting reservation information in the vacancy waiting reservation information DB 12h (step S403). When finishing this processing, the system control unit 14 finishes the processing upon reception of the vacancy waiting reservation request.

In addition, the vacancy waiting reservation information may be configured to include vacancy waiting ranking order information which indicates a vacancy waiting ranking order or vacancy waiting deadline information which indicates a deadline to maintain vacancy waiting. The system control unit 14 sets the vacancy waiting ranking order information to the vacancy waiting reservation information of the same accommodation plan such that, when, for example, a reservation day is earlier, the vacancy waiting ranking order is higher. Further, the deadline to maintain vacancy waiting is a deadline specified by a user who requests a vacancy waiting reservation. After this deadline passes, vacancy waiting is canceled. That is, even when there is vacancy corresponding to the number of use guest rooms, a reservation is not made. The system control unit 14 decides, for example, on a regular basis whether or not a vacancy waiting maintaining deadline indicated by the vacancy waiting deadline information of each vacancy waiting reservation information registered in the vacancy waiting reservation information DB 12h passes, and deletes the vacancy waiting reservation information the deadline of which has passed, from the vacancy waiting reservation information DB 12h.

Further, the system control unit 14 may delete from the vacancy waiting reservation information DB 12h vacancy waiting reservation information which has a probability that the vacancy number becomes the number of use guest rooms by a check-in day of a vacancy waiting target accommodation plan is lower than a threshold set in advance among vacancy waiting reservation information registered in the vacancy waiting reservation information DB 12h. Furthermore, the system control unit 14 may send an email which notifies that vacancy waiting is canceled, to a user associated with the user ID included in the deleted vacancy waiting reservation information. The system control unit 14 may perform processing of deciding the probability that the vacancy number becomes the number of use guest rooms or more and deleting the vacancy waiting reservation information with respect to vacancy waiting reservation information associated with an accommodation plan the vacancy number of which increased upon, for example, execution of processing upon an increase in the vacancy number, or with respect to each vacancy waiting reservation information registered in the vacancy waiting reservation information DB 12h on a regular basis. Further, the processing of estimating the probability that the vacancy number becomes the number of use guest rooms or more may be the same as, for example, the vacancy occurrence score estimation processing.

Fig. 13B is a flowchart illustrating a processing example of processing at the time of an increase in a vacancy number in the system control unit 14 of the accommodation facility reservation server 1 according to the present embodiment. The processing upon an increase in the vacancy number is started when, for example, a reservation is canceled or the number of allocation of guest rooms increases, and one of vacancy numbers registered in the accommodation plan vacancy information DB 12f increases.

First, the system control unit 14 searches from the vacancy waiting reservation information DB 12h for reservation information the accommodation days from a check-in day to a previous day of a check-out day of which overlaps days (referred to as "increase days" below) the vacancy number of which increases among vacancy waiting reservation information associated with a plan ID of an accommodation plan (referred to as an "increase plan" below) the vacancy number of which has increased (step S451). Next, the system control unit 14 decides whether or not the vacancy waiting reservation information is searched (step S452). In this case, when deciding that the vacancy waiting reservation information is not searched (step S452: NO), the system control unit 14 finishes the processing upon an increase in the vacancy number.

Meanwhile, when deciding that the vacancy waiting reservation information is searched (step S452: YES), the system control unit 14 selects vacancy waiting reservation information a reservation date of which is the earliest among the searched vacancy waiting reservation information (step S453). In addition, when the vacancy waiting ranking order information is included in the vacancy waiting reservation information, vacancy waiting reservation information which has the highest ranking order indicated by the vacancy waiting ranking order information is selected. Next, the system control unit 14 decides whether or not the vacancy number of each accommodation day from a check-in day to a previous day of a check-out day included in the selected vacancy waiting reservation information among the vacancy numbers associated with plan IDs of an increase plan is the number of use guest rooms included in the selected vacancy waiting reservation information or more (step S454). In this case, when deciding that the vacancy number of one or more accommodation days is not the number of use guest rooms or more (step S454: NO), the system control unit 14 finishes the processing upon an increase in the vacancy number.

Meanwhile, when deciding that the total vacancy number is the number of use guest rooms or more (step S454: YES), the system control unit 14 makes a reservation. First, the system control unit 14 performs processing of decreasing the vacancy number (step S455). More specifically, the system control unit 14 subtracts the number of use guest rooms from the vacancy number of each accommodation day of the increase plan, and adds the number of use guest rooms to the reservation number of each accommodation day of the increase plan. Next, the system control unit 14 subtracts the number of use guest rooms from the vacancy number of each accommodation day of a guest room type (referred to as an "increase guest room type" below) allocated to the increase plan. Next, the system control unit 14 specifies an accommodation plan other than the increase plan among accommodation plans to which the increase guest room type is allocated. Next, when there is a higher vacancy number than the vacancy number of the increase guest room type among the vacancy numbers of each accommodation day of the specified accommodation plan, the system control unit 14 matches this vacancy number with the vacancy number of the increase guest room type.

Next, the system control unit 14 registers the selected vacancy waiting reservation information in the reservation information DB 12g as reservation information (step S456). In this case, the system control unit 14 changes the reservation date to a current date. Next, the system control unit 14 registers in the reservation history DB 12i a reservation history including the selected vacancy waiting reservation information and a cancelation flag which is set to off (step S457). Next, the system control unit 14 sends an email which notifies that a reservation is completed, to a user associated with a user ID included in the selected vacancy waiting reservation information (step S458). Next, the system control unit 14 deletes the selected vacancy waiting reservation information from the vacancy waiting reservation information DB 12h (step S459).

Next, the system control unit 14 decides whether or not there are pieces of unselected vacancy waiting reservation information among the searched vacancy waiting reservation information (step S460). In this case, when deciding that there are pieces of unselected vacancy waiting reservation information (step S460: YES), the system control unit 14 selects vacancy waiting reservation information the reservation date of which is the earliest among the unselected vacancy waiting reservation information (step S461). Next, the system control unit 14 proceeds to step S454. Meanwhile, when deciding that all pieces of vacancy waiting reservation information are selected (step S460: NO), the system control unit 14 finishes the processing upon an increase in the vacancy number.

In addition, in steps S453 and S461, the system control unit 14 may take into account the number of use guest rooms included in the vacancy waiting reservation information upon determination of a priority to select vacancy waiting reservation information to register reservation information. More specifically, the system control unit 14 extracts vacancy waiting reservation information the number of use guest rooms of which is the vacancy number or less among the vacancy waiting reservation information searched in step S451. Next, the system control unit 14 selects vacancy waiting reservation information the reservation date of which is the earliest (or vacancy waiting reservation information which has the highest ranking order indicated by the vacancy waiting ranking order information) among the extracted vacancy waiting reservation information. Further, the system control unit 14 registers reservation information of the selected vacancy waiting reservation information, and updates the vacancy number of the increase plan. The system control unit 14 repeats this processing until the vacancy number becomes 0 or the vacancy waiting reservation information the number of use guest rooms of which is the vacancy number of an increase plan or less cannot be extracted.

As described above, according to the present embodiment, the system control unit 14 of the accommodation facility reservation server 1 acquires a vacancy number of an accommodation plan according to a user's request from the accommodation plan vacancy information DB 12f, acquires a reservation history or an allocation count increase history of accommodation plans matching a user's request, from the reservation history DB 12i or the allocation count increase history DB 12j, estimates based on the acquired history the probability that the vacancy number of an accommodation plan becomes a threshold or more by a check-in day of the accommodation plan the vacancy number of which is less than the threshold among accommodation plans matching the user's request, and provides information related to the accommodation plans matching the user's request in a display mode matching the estimated probability. Consequently, it is possible to increase convenience of the user to consider a reservation.

Further, the system control unit 14 estimates the probability that the acquired vacancy number of an accommodation plan less than the number of use guest rooms becomes the number of use guest rooms or more by a check-in day, and provides information related to an accommodation plan the estimated probability of which is the value set in advance or more among the accommodation plans matching the user' s request. Consequently, the user does not have to consider reservations of accommodation plans which have probabilities that the vacancy number becomes the threshold or more.

Further, the system control unit 14 estimates the probability that the vacancy number of an accommodation plan becomes 1 or more by a check-in day of an accommodation plan the acquired vacancy number of which is less than 1, and provides vacancy occurrence probability information which indicates the estimated probability in association with the information related to the accommodation plans matching the user's request. Consequently, the user can consider whether or not to wait for the vacancy number to become the threshold or more, based on the vacancy occurrence probability information.

Further, the system control unit 14 acquires from the accommodation plan vacancy information DB 12f the vacancy numbers and the numbers of allocation guest rooms of all accommodation plans allocated to the accommodation facility reservation site by an accommodation facility which provides accommodation plans the vacancy number of which is less than the threshold, and provides vacancy occurrence probability information of accommodation plans the overall reservation rate of the accommodation facility of which is less than a value set in advance among the accommodation plans matching the user's request based on the acquired vacancy number and number of allocation guest rooms. Consequently, it is possible to prevent the vacancy occurrence probability information of accommodation plans provided by accommodation facilities which have the good overall reservation rates of offer accommodation plans and do not need an increase in the reservation number, from being displayed.

Further, the system control unit 14 acquires from the accommodation facility information DB 12b the number of forced cancelation days associated with an accommodation plan the vacancy number of which is less than the threshold, and, when the number of remaining days by a check-in day of the accommodation plan the vacancy number of which is less the threshold is greater than the number of forced cancelation days, estimates a probability that the number of remaining days is the number of forced cancelation days or less. Consequently, the probability that the vacancy number of the accommodation plan the forced cancelation day of which exists by the check-in day is precisely estimated, so that it is possible to increase precision to estimate the probability that the vacancy number is the threshold or more.

Further, the system control unit 14 acquires from the reservation information DB 12g reservation information of an accommodation plan the vacancy number of which is less than the threshold, and, when the number of users included in the acquired reservation information is the number of people set in advance, estimates a higher probability compared to when the number of users is not the number of people set in advance. Consequently, when a probability that a reservation holder cancels a reservation changes depending on the number of people when a reservation holder who currently reserves an accommodation plan the vacancy number of which is less than the threshold uses this accommodation plan, it is possible to increase precision to estimate the probability that the vacancy number is the threshold or more.

Further, the system control unit 14 acquires from the reservation information DB 12g a user ID included in reservation information of an accommodation plan the vacancy number of which is a threshold or less, acquires from the reservation history DB 12i a reservation history of a user identified based on the acquired user ID, and estimates a higher probability when a cancelation rate of a reservation by a user who reserves the accommodation plan the vacancy number of which is less than the threshold is high, based on the acquired reservation history. Consequently, it is possible to increase precision to estimate the probability that the vacancy number is the threshold or more.

Further, the system control unit 14 acquires from the reservation information DB 12g a user ID included reservation information of an accommodation plan the vacancy number of which is less than the threshold, and, when reservation information of other accommodation plans accommodation days of which overlap the accommodation plans the vacancy numbers of which are less than the threshold among reservation information including the acquired user ID is registered in the reservation information DB 12g, estimates a higher probability than when the reservation information is not registered. Consequently, it is possible to increase precision to estimate the probability that the vacancy number is the threshold or more.

In addition, although, in the above embodiment, the accommodation facility reservation server 1 estimates the probability that the vacancy number is the threshold or more based on both of a history of cancelation of accommodation plans based on the reservation history, and a history of an increase in the number of allocation guest rooms of an accommodation plan based on an allocation count increase history, the accommodation facility reservation server 1 may estimate the probability based on one of these histories.

Further, in the above embodiment, the accommodation facility reservation server 1 displays the vacancy occurrence probability information 234 in a vacancy calendar page as information which indicates the probability that the vacancy number is the threshold or more. However, the accommodation facility reservation server 1 may provide a search result page such that information which indicates the probability that the vacancy number is the threshold or more is displayed in association with accommodation plans displayed as a list in a search result page. In this case, the accommodation facility reservation server 1 may display a list of all searched accommodation plans in a search result page irrespectively of the probability that the vacancy number is the threshold or more. Further, the accommodation facility reservation server 1 may provide an accommodation plan page such that information which indicates the probability that the vacancy number is the threshold or more is displayed in accommodation plan pages of accommodation plans the vacancy numbers of which are less than the threshold. Furthermore, the information which indicates the probability that the vacancy number is the threshold or more may be, for example, figures, icons, marks or letters.

Still further, although the present invention is applied to reserve an accommodation facility in the above embodiment, the present invention is also applicable to, for example, reserve seats of transportation means such as airplanes, trains, buses and liners and reserve an athletic facility such as a golf course.

### Reference Signs List

- 1: Accommodation facility reservation server
- 2: Accommodation facility terminal
- 3: User terminal
- 11: Communication unit
- 12: Memory unit
- 12a: Member information DB
- 12b: Accommodation facility information DB
- 12c: Guest room information DB
- 12d: Accommodation plan information DB
- 12e: Guest room type vacancy information DB
- 12f: Accommodation plan vacancy information DB
- 12g: Reservation information DB
- 12h: Vacancy waiting reservation information DB
- 12i: Reservation history information DB
- 12j: Allocation count increase history DB
- 13: Input/output interface
- 14: System control unit
- 14a: CPU
- 14b: ROM
- 14c: RAM
- 15: System bus
- NW: Network
- S: Accommodation facility reservation system

## Claims

1. An information providing apparatus comprising:
a remaining count acquiring means that acquires, from a remaining count memory means that stores remaining numbers of reservation targets per reservation target specified by a combination of a service and an offer period of the service, the remaining numbers of reservation targets matching a user's request;
a history acquiring means that acquires, from a history memory means that stores a remaining count increase history of an increase in the remaining numbers stored in the remaining count memory means, the remaining count increase history of the service matching the user's request;
an estimating means that estimates a probability that the remaining numbers of the reservation targets become a threshold or more by the offer period of the reservation targets for which the remaining numbers acquired by the remaining count acquiring means are less than the threshold, among the reservation targets matching the user's request, based on the remaining count increase history acquired by the history acquiring means; and
a providing means that provides information related to the reservation targets matching the user's request, in a display mode matching the probability estimated by the estimating means.

2. The information providing apparatus according to claim 1,
wherein the user's request includes a use date and a number of use of a reservation target;
the estimating means estimates a probability that the remaining number of the reservation targets which is acquired by the remaining count acquiring means and which is less than the number of use becomes the number of use or more by the use date; and
the providing means provides information related to reservation targets for which the probability estimated by the estimating means is a value set in advance or more among the reservation targets matching the user's request.

3. The information providing apparatus according to claim 1,
wherein the user's request includes identification information which identifies a service;
the estimating means estimates a probability that the remaining number of the reservation target becomes 1 or more by the use date of reservation targets for which the remaining number acquired by the remaining number acquiring means is less than 1; and
the providing means provides information which indicates the probability estimated by the estimating means, in association with information related to the reservation targets matching the user's request.

4. The information providing apparatus according to claim 3, further comprising
an acquiring means that acquires the remaining number associated with a service provided by a provider of the reservation targets whose remaining numbers are less than the threshold from the remaining count memory means, and that acquires a number of reservation targets associated with the service provided by the provider, from a reservation target count memory means that stores the number of the reservation targets per reservation target,
the providing means provides information which indicates the probability estimated by the estimating means, for a reservation target for which a reservation rate of the service provided by the provider is less than a value set in advance, among the reservation targets matching the user's request, based on the remaining number and the number of reservation targets acquired by the acquiring means.

5. The information providing apparatus according to any one of claims 1 to 4,
wherein the remaining count increase history stores a history that a reservation holder cancels a reservation of the service, as the remaining count increase history; and
the estimating means estimates a probability that the remaining numbers become the threshold or more based on the cancellation of the reservation of the reservation targets by the offer period of the reservation targets whose remaining numbers are less than the threshold.

6. The information providing apparatus according to any one of claims 1 to 5,
wherein the remaining count increase history stores a history of an increase in a number of reservation targets of services, as the remaining count increase history; and
the estimating means estimates a probability that the remaining number becomes the threshold or more based on the increase in the number of reservation targets of the reservation targets by the offer period of the reservation targets whose remaining numbers are less than the threshold.

7. The information providing apparatus according to any one of claims 1 to 6, further comprising
a day count acquiring means that acquires a number of days associated with the reservation targets whose remaining numbers are less than the threshold, from a day count memory means which stores the number of days from a cancelation day of a service whose reservation is canceled when a reservation holder does not satisfy a condition set in advance on the cancelation day, to an offer day of the service,
wherein, when a number of remaining days by the offer period of the reservation targets whose remaining numbers are less than the threshold is greater than the number of days acquired by the acquiring means, the estimating means estimates a high probability as compared to the case where the number of remaining days is the number of days or less.

8. The information providing apparatus according to any one of claims 1 to 7, further comprising
a reservation information acquiring means that acquires the reservation information of the reservation targets whose remaining numbers are less than the threshold, from reservation information which stores reservation information which includes a number of users of a reserved reservation target,
when the number of users included in the reservation information acquired by the reservation information acquiring means is a number of people set in advance, the estimating means estimates a high probability as compared to the case where the number of users is not the number of people set in advance.

9. The information providing apparatus according to any one of claims 1 to 8, further comprising:
a user identification information acquiring means that acquires, from a reservation information memory means that stores reservation information which includes user identification information which is used to identify a user who reserves a reservation target, the user identification information included in the reservation information of the reservation targets whose remaining numbers are less than the threshold; and
a reservation history acquiring means that acquires, from a reservation history memory means that stores a reservation history that a user makes a reservation and cancels the reservation, the reservation history of the user identified based on the user identification information acquired by the user identification information acquiring means,
wherein the estimating means estimates a high probability, based on the reservation history acquired by the reservation history acquiring means, when a reservation cancelation rate of the user who reserves the reservation target whose remaining number is less than the threshold is high.

10. The information providing apparatus according to any one of claims 1 to 8, further comprising
a user identification information acquiring means that acquires, from a reservation information memory means that stores reservation information which includes user identification information which is used to identify a user who reserves a reservation target, the user identification information included in the reservation information of the reservation targets whose remaining numbers are less than the threshold,
when the reservation information of other reservation targets provided at the same period as the reservation targets whose remaining numbers are less than the threshold among the reservation information including the user identification information acquired by the user identification information acquiring means is stored in the reservation information memory means, the estimating means estimates a high probability as compared to the case where the reservation information is not stored.

11. An information providing method executed by an information providing apparatus comprising:
a remaining number acquiring step of acquiring, from a remaining count memory means that stores remaining numbers of reservation targets per reservation target specified by a combination of a service and an offer period of the service, the remaining numbers of reservation targets matching a user's request;
a history acquiring step of acquiring, from a history memory means that stores a remaining count increase history of an increase in the remaining numbers stored in the remaining count memory means, the remaining count increase history of the service matching the user's request;
an estimating step of estimating a probability that the remaining number of the reservation targets becomes a threshold or more by the offer period of reservation targets for which the remaining numbers acquired in the remaining number acquiring step are less than the threshold, among the reservation targets matching the user's request, based on the remaining count increase history acquired in the history acquiring step; and
a providing step of providing information related to the reservation targets matching the user's request in a display mode matching the probability estimated in the estimating step.

12. An information providing program causing a computer included in an information providing apparatus to function as:
a remaining count acquiring means that acquires, from a remaining count memory means that stores remaining numbers of reservation targets per reservation target specified by a combination of a service and an offer period of the service, the remaining numbers of reservation targets matching a user's request;
a history acquiring means that acquires, from a history memory means that stores a remaining count increase history of an increase in the remaining numbers stored in the remaining count memory means, the remaining count increase history of the service matching the user's request;
an estimating means that estimates a probability that the remaining numbers of the reservation targets become a threshold or more by the offer period of the reservation targets for which the remaining numbers acquired by the remaining count acquiring means are less than the threshold, among the reservation targets matching the user's request, based on the remaining count increase history acquired by the history acquiring means; and
a providing means that provides information related to the reservation targets matching the user's request, in a display mode matching the probability estimated by the estimating means.

13. A recording medium having a computer-readable information providing program recorded thereon which causes a computer included in an information providing apparatus to function as:
a remaining count acquiring means that acquires, from a remaining count memory means that stores remaining numbers of reservation targets per reservation target specified by a combination of a service and an offer period of the service, the remaining numbers of reservation targets matching a user's request;
a history acquiring means that acquires, from a history memory means that stores a remaining count increase history of an increase in the remaining numbers stored in the remaining count memory means, the remaining count increase history of the service matching the user's request;
an estimating means that estimates a probability that the remaining numbers of the reservation targets become a threshold or more by the offer period of the reservation targets for which the remaining numbers acquired by the remaining count acquiring means are less than the threshold, among the reservation targets matching the user's request, based on the remaining count increase history acquired by the history acquiring means; and
a providing means that provides information related to the reservation targets matching the user's request, in a display mode matching the probability estimated by the estimating means.
